# EUROPEAN PATENT APPLICATION

(11) **EP 4 474 088 A1**
(43) Date of publication of application: **11.12.2024**
(21) Application number: 24179861.0
(22) Date of filing: 04.06.2024
(51) Int. Cl.: B23D 45/16, B23D 47/00, B23D 47/12, B23D 59/00, B25F 5/00, B25F 5/02, B28D 1/04

(54) **CUT-OFF SAW**

(30) Priority: 09.06.2023 WO PCT/CN2023/099271
(71) Applicant: Robert Bosch GmbH, 70442 Stuttgart (DE)
(72) Inventor: Wang, Kang, Jiangsu, 211100 (CN); Monteverde, Richard, Chicago, IL, 60630 (US)

(57) **Abstract**

A cut-off saw housing (2) includes features that define cooling air flow paths through the saw housing that are configured to cool the battery pack (116), the saw electronics (118) and the saw electric motor (101). The first cooling path (108) passes through a compartment (18(1)) that houses the battery and cools the battery before exiting the saw housing (2). The second cooling path (110) passes below the compartment (18(1)) and through a heat sink of a printed circuit board assembly (112) before exiting the saw housing (2). Both the first and second cooling paths (108, 110) pass through the electric motor (101) before exiting the saw housing (2).

## Description

### BACKGROUND

A cut-off saw is a hand-held power tool that employs a circular blade that is mounted in front of the saw housing. A cut-off saw is free of a lower blade guard and often drives a cutting blade having a diameter that is in a range of eight to fourteen inches. This type of saw is designed to be a versatile solution for cutting a large variety of heavy materials, including reinforced concrete, other masonry materials, and metals including iron and black pipe. Due to the power requirements for cutting heavy materials, it is desirable to have increased cooling of the components disposed within the saw housing, including a battery pack, a printed circuit board that supports control electronics and an electric motor, as compared some conventional saws.

### SUMMARY

A cut-off saw includes a saw housing, a brushless electric motor disposed within the saw housing, and a battery pack coupled to the saw housing that provides power to the motor and a printed circuit board assembly (PCBA). The cut-off saw further includes a blade drive assembly disposed in a support arm that protrudes from a front end of the saw housing. The blade drive assembly couples a cutting blade to the cut-off saw and transmits the rotational output of the motor to the cutting blade. The saw housing includes a rear handle that extends from a rear end of the saw housing. In addition, an auxiliary handle overlies an upper side of the saw housing. The battery pack is disposed in a battery compartment defined by the saw housing. The battery compartment is positioned between the motor and the rear handle, and the battery pack is accessible via a battery cover that is detachably coupled to the saw housing.

The housing defines rear-facing air inlet openings adjacent the rear handle in communication with an interior of the housing. In addition, the housing defines side-facing air outlet openings adjacent the motor and in communication with the interior of the housing. In response to activation of the motor, the motor and a motor driven fan draw cooling air flow through the rear air intake openings. The cooling air flow follows a first cooling air flow path that enters the battery compartment and flows around all sides of the battery pack within the battery compartment. Upon exiting the battery compartment, the first cooling air flow path passes over the PCBA and an adjoining heat sink, and then passes through the motor. The first cooling air flow path is then discharged from the side-facing air outlet opening. In addition, the cooling air flow follows a second cooling air flow path that passes below the battery compartment to provide cooling to electrical wiring in that location, passes over the PCBA and the heat sink, and is discharged from the side air outlet openings. The first and second cooling air flow paths provide improved cooling of the battery pack, motor and control electronics as compared to some conventional saws. In addition, the air outlet openings direct a high volume of air outward from the housing in a lateral and forward direction, providing an air curtain that pushes cutting dust and debris away from the user and the front of the cut-off saw, improving user experience and work area visibility.

The support arm of the saw housing encloses a blade drive assembly. The blade drive assembly is a belt-free, direct-drive system that includes several subassemblies that cooperate to transmit the rotational output of the electric motor to the cutting blade. For example, an intermediate drive subassembly is mechanically connected to the electric motor and transmits the rotational motion of the motor to a gear set subassembly. The gear set subassembly connects the intermediate drive assembly to a blade connection assembly and reduces the rotational speed of the motor output shaft. The fourth subassembly is a spindle lock assembly that is operable to selectively engage with the gear set to prevent movement of the gear set during attachment and detachment of the cutting blade. The spindle lock assembly includes a cammed lock handle that is movable between a folded position in which the gear set is unlocked and able to freely rotate, and an unfolded position in which the gear set is locked and prevented from motion. In the unfolded position, the lock handle serves as a user handle.

In some aspects, a saw includes a saw housing. The saw housing includes a front end and a rear end opposite the front end. The rear end includes a housing rear inlet opening that permits fluid communication between an interior space of the saw housing and an environment of the saw housing. The saw housing includes a longitudinal axis that extends through the front end and the rear end. The saw housing includes a first lateral side that extends between the front end and the rear end. The first lateral side has a housing side outlet opening that permits fluid communication between the interior space of the saw housing and the environment of the saw housing. The saw housing includes a second lateral side that extends between the front and the rear end. The second lateral side is disposed on a side of the longitudinal axis that is opposite the first lateral side. The saw housing includes a hollow support arm that protrudes outward from the front end. The support arm is configured to support a cutting blade. The saw housing includes a main handle that protrudes outward from an outer surface of the housing. In addition, the saw housing includes partitioning walls disposed in the interior space of the saw housing. The partitioning walls include a first wall that faces the rear end and a second wall that faces the front end. The first wall and the second wall extend between the first lateral side and the second lateral side so as to define a first compartment of the interior space that is separate from a second compartment of the interior space. The first compartment is configured to receive and support a battery pack. The saw includes an electric motor that is disposed in the second compartment. The electric motor has an output shaft that is rotatable about an output shaft axis and the output shaft is disposed in a plane that is parallel to the longitudinal axis. The saw includes a motor fan driven by the output shaft. The motor fan is disposed between the electric motor and the front end and configured to draw cooling air through the saw housing via a first cooling air flow path. The saw includes a printed circuit board assembly that supports electronics that are configured to control operation of the saw. The printed circuit board assembly is disposed between the second wall and the electric motor. The first compartment is disposed between the electric motor and the rear end. The first cooling air flow path begins at the housing rear inlet opening, extends from the housing rear inlet opening to a first compartment inlet aperture formed in the first wall, extends from the first compartment inlet aperture through the first compartment to a first compartment outlet aperture formed in the second wall, extends from the first compartment outlet aperture and into the second compartment, extends through the second compartment, and ends at the housing side outlet opening.

In some embodiments, the first cooling air flow path enters the first compartment in a first direction that is parallel to the longitudinal axis, the first cooling air flow path exits the first compartment in the first direction, and between entering the first compartment and exiting the first compartment, the first cooling air flow path moves in a direction perpendicular to the first direction.

In some embodiments, the first compartment outlet aperture is offset relative to the first compartment inlet aperture along an axis perpendicular to the longitudinal axis.

In some embodiments, the saw includes a battery pack disposed in the first compartment, the battery pack includes four sides that extend in parallel to the longitudinal axis, and the first cooling air flow path passes over each of the four sides of the battery pack.

In some embodiments, after extending through the second compartment and before ending at the housing side outlet opening, the first cooling air flow path passes across the printed circuit board assembly and through the electric motor.

In some embodiments, the printed circuit board assembly includes printed circuit board and a heat sink that adjoins one side of the printed circuit board. The heat sink is disposed between printed circuit board and the second wall, the heat sink includes an array of protruding cooling fins that protrude toward the second wall, and the first cooling air flow path passes through the array of cooling fins.

In some embodiments, the array of protruding cooling fins extends in a direction parallel to the first lateral side and the second lateral side.

In some embodiments, the saw housing includes a third side and a fourth side. The third side extends between the front end and the rear end and between the first lateral side and the second lateral side. The fourth side extends between the front and the rear end and between the first lateral side and the second lateral side and the fourth side disposed on a side of the longitudinal axis that is opposite the third side. The saw includes a second cooling air flow path through the saw housing. The second cooling air flow path begins at the housing rear inlet opening, extends from the housing rear inlet opening to a gap between the first compartment and the third side of the saw housing, extends through the gap and exiting into the second compartment, and ends at the housing side outlet opening.

In some embodiments, the second cooling air flow path passes across the printed circuit board assembly and through the electric motor.

In some embodiments, the printed circuit board assembly includes a printed circuit board and a heat sink that adjoins one side of the printed circuit board. The heat sink includes an array of protruding cooling fins, and the second cooling air flow path passes through the protruding cooling fins before passing across the printed circuit board and through the electric motor.

In some embodiments, the saw housing is formed of a first half shell and a second half shell that are joined along a parting line that extends from the front end to the rear end. The housing rear inlet opening includes two housing rear inlet openings. One of the two housing rear inlet openings is formed in the first half shell and the other of the two housing rear inlet openings is formed in the second half shell. In addition, the housing side outlet opening includes two housing side outlet openings. One of the two housing side outlet openings is formed in the first half shell and the other of the two housing side outlet openings is formed in the second half shell.

In some embodiments, the printed circuit board assembly resides in a plane that is perpendicular to the longitudinal axis.

In some embodiments, the printed circuit board assembly includes a printed circuit board and a heat sink that adjoins one side of the printed circuit board. The saw housing includes a wall portion that supports the printed circuit board assembly, and the wall portion is configured to direct airflow to the heat sink.

In some embodiments, a blade drive assembly is disposed in the support arm. The blade drive assembly is configured to detachably connect a cutting blade to the support arm and transmit a rotational motion of the output shaft to the cutting blade when the cutting blade is connected to the saw.

In some embodiments, a battery pack is disposed in the first compartment. The battery pack is configured to supply power to the electric motor.

In some aspects, a saw includes a saw housing. The saw housing includes a front end, a rear end opposite the front end, a hollow support arm that protrudes outward from the front end, a main handle that protrudes outward from the rear end, and partitioning walls that are disposed in an interior space of the saw housing. The partitioning walls form a first compartment of the interior space that is separate from a second compartment of the interior space. The saw includes an electric motor that is disposed in the second compartment. The electric motor includes an output shaft that is rotatable about an output shaft axis. The saw includes a battery pack disposed in the first compartment. The battery pack is configured to supply power to the electric motor. The saw includes a printed circuit board assembly that supports electronics that are configured to control operation of the saw. The printed circuit board is disposed between the battery pack and the electric motor. In addition, the saw includes a blade drive assembly disposed in the support arm. The blade drive assembly is configured to detachably connect a cutting blade to the support arm and transmit a rotational motion of the output shaft to the cutting blade when the cutting blade is connected to the saw. The saw housing includes features that define a first cooling air flow path through the saw housing and a second cooling air flow path through the housing. The first cooling path passes through the first compartment before exiting the saw housing, the second cooling path passes around an outer surface of the first compartment before exiting the saw housing, and both the first and second cooling paths pass through the electric motor before exiting the saw housing.

### BRIEF DESCRIPTION OF THE FIGURES

Fig. 1 is a perspective view of a first side of a cut-off saw.
Fig. 2 is a perspective view of a second side of the cut-off saw.
Fig. 3 is a cross-sectional view of the cut-off saw as seen along line 3-3 of Fig. 8.
Fig. 4 is a cross-sectional view of the cut-off saw as seen along line 4-4 of Fig. 8.
Fig. 5 is a side view of the cut-off saw.
Fig. 6A is a cross-sectional view of the saw housing as seen along line 6-6 of Fig. 8.
Fig. 6B is a cross-sectional view of the saw housing as seen along line 6B-6B of Fig. 5.
Fig. 6C is a cross-sectional view of the saw housing as seen along line 6C-6C of Fig. 5.
Fig. 7 is a cross-sectional view of the cut-off saw as seen along line 6-6 of Fig. 8.
Fig. 8 is a rear view of the cut-off saw where broken arrows show air discharge directions.
Fig. 9 is a top view of the cut-off saw where broken arrows show air discharge directions.
Fig. 10 is a cross-sectional view of the cut-off saw as seen along line 10--10 of Fig. 9.
Fig. 11 is an enlarged view of the portion of the cut-off saw of Fig. 10 enclosed in broken lines.
Fig. 12 is a cross-sectional view of the cut-off saw as seen along line 12-12 of Fig. 5.
Fig. 13 is an enlarged cross-sectional view of a housing side outlet opening.
Fig. 14 is a perspective view of the motor.
Fig. 15 is a perspective view of the support arm of the saw housing.
Fig. 16 is a perspective view of the motor assembled with the support arm.
Fig. 17 is a cross-sectional view of the cut-off saw as seen along line 17--17 of Fig. 5.
Fig. 18 is an enlarged view of the portion of the cut-off saw of Fig. 17 enclosed in broken lines.
Fig. 19 is an exploded view of the blade connection assembly.
Fig. 20 is a perspective view of a schematic illustration of the driven gear of the gear set.
Fig. 21 is a cross-sectional view of the distal end of the support arm.
Fig. 22 is a side perspective view of a distal end of the support arm.
Fig. 23 is a top perspective view of the lock handle of the spindle lock assembly.
Fig. 24 is a bottom perspective view of the lock handle.
Fig. 25 is a top perspective view of the isolated spindle lock assembly shown with reference to the driven gear and spindle.
Fig. 26 is a bottom perspective view of the isolated spindle lock assembly.
Fig. 27 is a cross-sectional view of a portion of the cut-off saw as seen along line 3-3 of Fig. 8 showing the first cooling air flow path (represented by solid arrows) through the saw housing as seen in a side view.
Fig. 28 is a cross-sectional view of the cut-off saw as seen along line 6-6 of Fig. 8 showing the first cooling air flow path (represented by solid arrows) through the saw housing as seen in a top view.
Fig. 29 is a top perspective view of the cut-off saw illustrating the air curtain.
Fig. 30 is an enlarged view of a cross-section through of a portion of the saw housing showing detail of the housing side outlet opening where the broken arrow shows the air discharge direction.
Fig. 31 is an enlarged view of a cross-section through an alternative embodiment housing side outlet opening showing detail of the slot openings.
Fig. 32 is a top view of the cut-off saw, where arrows show air discharge directions corresponding to the alternative embodiment outlet openings of Fig. 31.
Fig. 33 is a top perspective view of the cut-off saw illustrating an alternative embodiment air curtain corresponding to the alternative embodiment outlet openings of Fig. 31.

### DETAILED DESCRIPTION

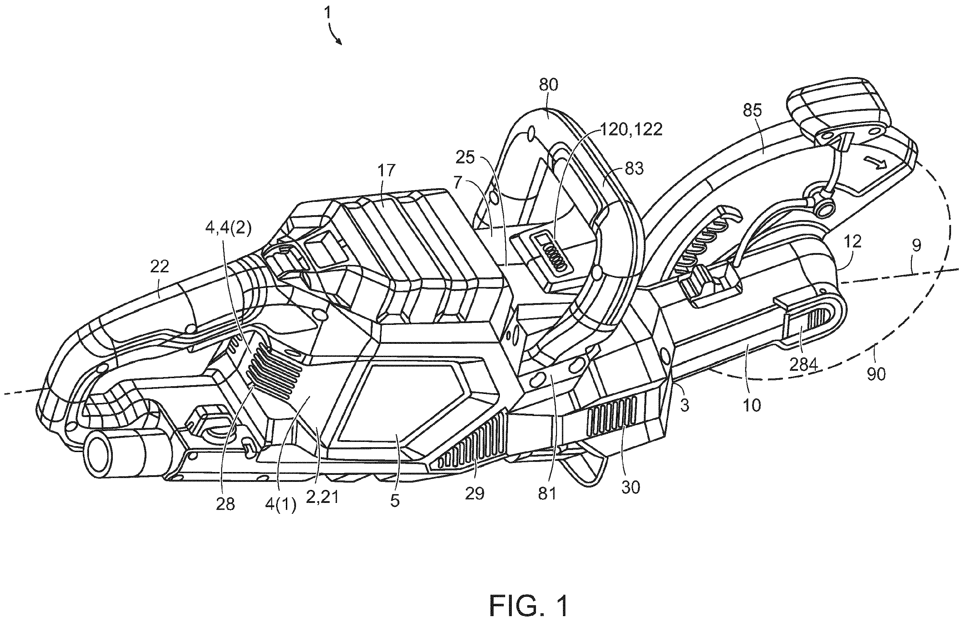

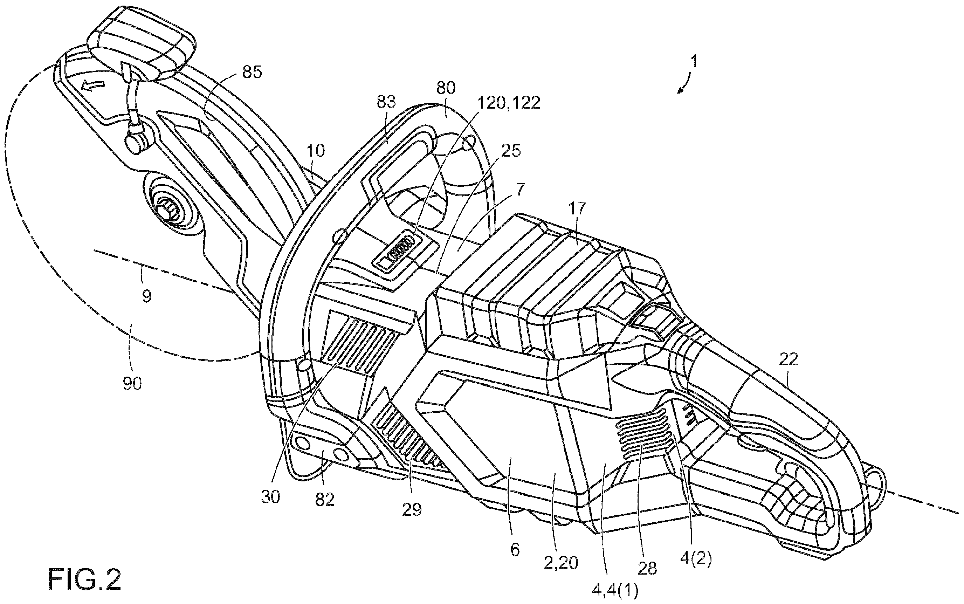

Referring to Figs. 1-6A, a cut-off saw 1 is a hand-held power tool that is configured to support and drive for rotation a cutting blade 90. The cutting blade 90 is circular and may be a segmented blade, an abrasive disk, or any other rotatable element capable of removing material from a workpiece. In some embodiments, the cutting blade 90 may have an outer diameter that is in a range of eight to fourteen inches. For example, the cutting blade 90 may have a nine inch diameter. The cut-off saw 1 includes a saw housing 2 that encloses an electric motor 101 that is configured to drive the cutting blade 90, a battery pack 116 that is configured to supply power to the electric motor 101, a printed circuit board assembly (PCBA) 112 that supports control electronics including a controller (not shown), and other saw components as will be described in detail below. The saw housing 2 includes a main handle 22 that protrudes from a rear end 4 of the saw housing 2, and a support arm 10 that protrudes from a front end 3 of the saw housing 2 in a direction opposite that of the main handle 22. The cutting blade 90 may be quickly and easily mounted to or detached from the distal end 12 of the support arm 10. The saw housing 2 includes features that cool the battery pack 116, the control electronics 118 and the electric motor 101. The saw housing 2 includes features that permit an air curtain 180 to be formed in the vicinity of the cutting blade 90 in order to remove dust and debris from the work space and improve visibility of the workpiece. In addition, the saw housing 2 includes features that prevent or inhibit ingress of water into the saw housing. Each of these features of the saw housing 2 will be described in detail below.

A blade drive assembly 200 is housed within the hollow support arm 10. The blade drive assembly 200 is configured to detachably connect the cutting blade 90 to the support arm distal end 12 and transmit a rotational motion of an output shaft 102 of the electric motor 101 to the cutting blade 90 when the cutting blade 90 is connected to the cut-off saw 1. The blade drive assembly 200 includes a blade lock handle 284 that is configured to lock the blade drive assembly 200 so that the cutting blade 90 can be attached to or removed from the cut-off saw 1. The lock handle 284 may be pivoted into an orientation in which the lock handle 284 also serves as handle that permits the user to more easily control a position of the cut-off saw during cutting blade attachment and detachment. Details of the blade drive assembly 200 including the lock handle 284 will also be described in detail below.

The saw housing 2 is a clamshell housing having left and right cooperating half shells 20, 21 that are joined along a parting line 25 that extends from the front end 3 to the rear end 4. The saw housing 2 is elongated along a housing longitudinal axis 9 that is parallel to the parting line 25 and extends through the opposed front and rear ends 3, 4. The saw housing 2 has four sides that extend between the front end 3 and the rear end 4, including a first side 5, a second side 6, a third side 7 and a fourth side 8. When the cut-off saw 1 is oriented as shown in Fig. 1, the first side 5 and the second side 6 provide the lateral, or side, surfaces of the saw housing 2. In addition, the third side 7 provides a top surface and the fourth side 8 provides a bottom surface. The fourth side 8 is substantially parallel to the housing longitudinal axis 9. As used herein, the term "substantially parallel" refers to the exact state as well as minor variations due to manufacturing and assembly variations. Thus, the fourth side 8 may be exactly parallel to the housing longitudinal axis 9 or may be slightly angled relative to the housing longitudinal axis 9, for example as much as plus or minus five degrees. The first side 5, the second side 6, the third side 7, the fourth side 8, the front end 3 and the rear end 4 cooperate to define an interior space 18 of the saw housing 2.

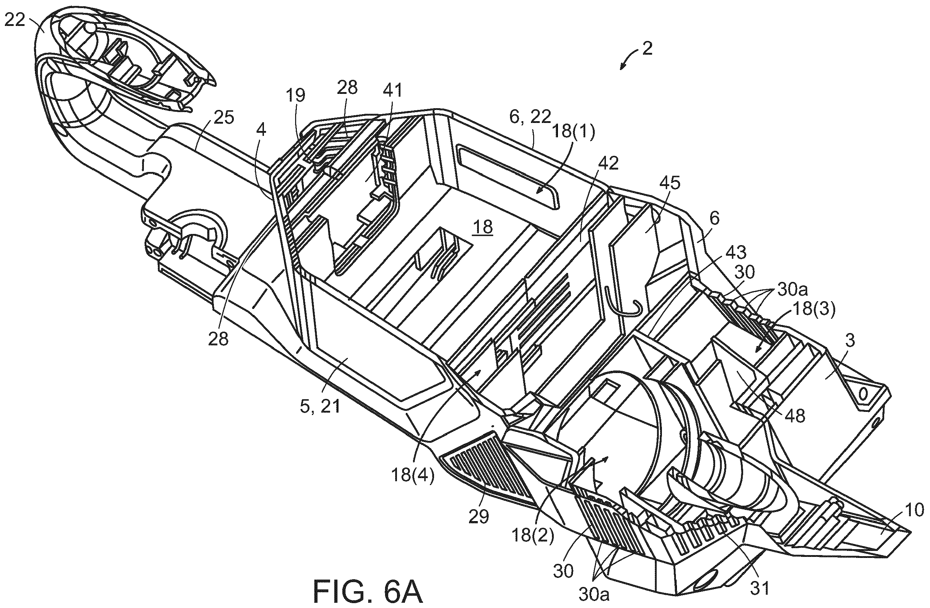

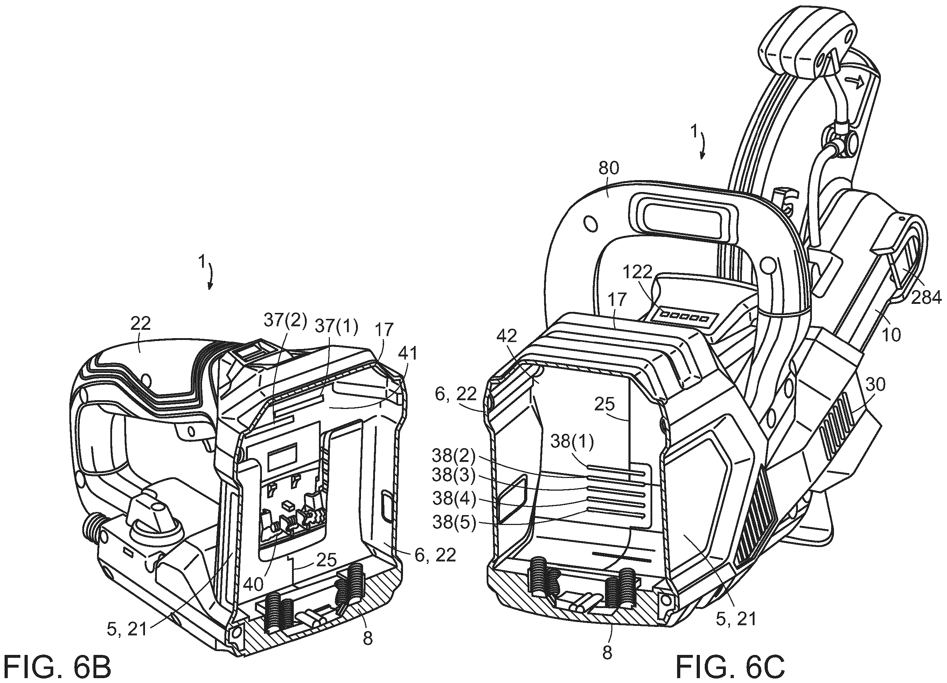

Referring to Figs. 6A-C, the saw housing 2 includes first and second partitioning walls 41, 42 that are disposed in the interior space 18 and extend laterally between the housing first and second sides 5, 6. The first partitioning wall 41 is disposed between the second partitioning wall 42 and the rear end 4 such that a narrow gap 19 is disposed between the first partitioning wall 41 and the rear end 4.

The first and second partitioning walls 41, 42 cooperate to form a first compartment 18(1) that is disposed near the rear end 4 and is separate from the remainder of the interior space 18. The first compartment 18(1) is configured to receive the battery pack 116, and thus is also referred to as the battery compartment.

The saw housing fourth side 8 closes a lower end of the first compartment 18(1), whereas an upper end of the first compartment 18(1) is closed by a detachable lid 17. References to relative direction such as upper, lower, lateral, above, below, top, bottom, etc. are made herein with respect to the orientation of the cut-off saw 1 shown in Fig. 1 for purposes of description and are not intended to be limiting since it is understood that the cut-off saw 1 may be used and/or stored in any orientation.

The first partitioning wall 41 includes two first compartment inlet apertures 37(1), 37(2) that permit fluid communication between the gap 19 and the first compartment 18(1). The first compartment inlet apertures 37(1), 37(2) are elongated, narrow slots that extend laterally toward the respective first and second sides 5, 6. The first compartment inlet apertures 37(1), 37(2) are partially vertically aligned and are each disposed at a location that is closer to the third side 7 (e.g., the top surface of the saw housing 2) than the fourth side 8 (e.g., the bottom surface of the saw housing 2). In the illustrated embodiment, the upper first compartment inlet aperture 37(1) extends across the parting line 25 and is offset toward the second side 6, whereas the lower first compartment inlet aperture 37(2) extends across the parting line 25 and is offset toward the first side 5.

The second partitioning wall 42 is opposite and spaced apart from the first partitioning wall 41. The second partitioning wall 42 includes first compartment outlet apertures 38(1), 38(2), 38(3), 38(4), 38(5) that permit fluid communication between the first compartment 18(1) and a second compartment 18(2) of the saw housing 2. The first compartment outlet apertures 38(1), 38(2), 38(3), 38(4), 38(5) are elongated, narrow slots that extend laterally toward the respective first and second sides 5, 6. The first compartment outlet apertures 38(1), 38(2), 38(3), 38(4), 38(5) are vertically aligned and extend across the parting line 25. Each of the first compartment outlet apertures 38(1), 38(2), 38(3), 38(4), 38(5) is disposed at a location that is closer to the fourth side 8 (e.g., the bottom surface of the saw housing 2) than the third side 7 (e.g., the top surface of the saw housing 2).

Thus, the first compartment 18(1) includes the first compartment inlet apertures 37(1), 37(2) that are located near the top surface of the saw housing 2 and outlet apertures 38(1), 38(2), 38(3), 38(4), 38(5) that are located near the bottom surface of the saw housing. By this configuration, the first compartment inlet apertures 37(1), 37(2) are offset relative to the first compartment outlet apertures 38(1), 38(2), 38(3), 38(4), 38(5) along an axis that is perpendicular to the housing longitudinal axis 9 and passes through the third and fourth sides 7, 8. Thus, cooling air flow entering the upper portion of the first compartment 18(1) via the first compartment inlet apertures 37(1), 37(2) may exit the first compartment 18(1) at a lower portion thereof via first compartment outlet apertures 38(1), 38(2), 38(3), 38(4), 38(5). The vertical offset of the inlet apertures relative to the outlet apertures promotes the flow of cooling air around all sides of the battery pack 116 prior to the exit of the flow from the first compartment 18(1).

The first partitioning wall 41 may support electrical contacts 40 that are configured to form an electrical connection with corresponding electrical contacts (not shown) of the battery pack 116. In some embodiments, the electrical contacts 40 may be disposed on the first partitioning wall 41 between the first compartment inlet apertures 37(1), 37(2) and the fourth side 8. Thus, as cooling air flow is drawn around the battery pack 116 from the upper portion of the battery compartment to the lower portion of the battery compartment, the electrical contacts 40 are disposed in the cooling air flow path, facilitating improved cooling of the battery pack 116 as compared to some other saws. In addition, by providing multiple inlet apertures and multiple outlet apertures, the volume of air flow through the first compartment is made large.

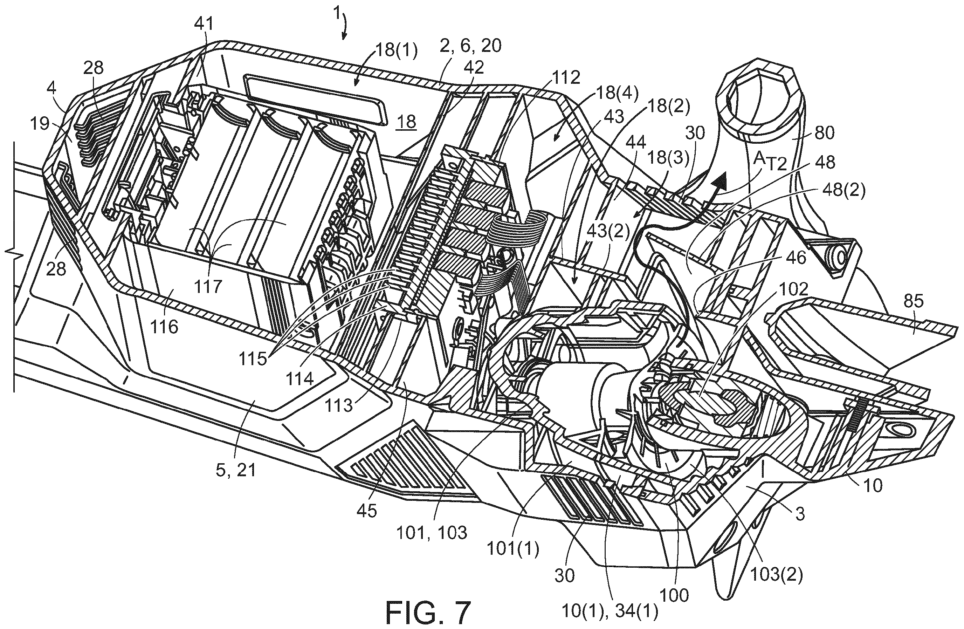

Referring to Fig. 7, the area of the interior space 18 disposed between the first compartment 18(1) and the front end 3 is further segregated by a third partitioning wall 43 that extends from the front end 3 toward the rear end 4 in a direction parallel to the housing longitudinal axis 9. The third partitioning wall 43 resides generally midway between the first and second sides 5, 6. A second compartment 18(2) that houses the electric motor 101 is defined between the third partitioning wall 43, the second half shell 21 and the housing front end 3. A third compartment 18(3) is defined between the third partitioning wall 43, the first half shell 20, the front end 3 and a fourth partitioning wall 44. The fourth partitioning wall 44 is disposed at the rear-most end of the third partitioning wall 43 and extends laterally between the third partitioning wall 43 and the housing second side 6.

A space 18(4) exists between the second partitioning wall 42 and the third and fourth partitioning walls 43, 44. The PCBA 112 is disposed in the space 18(4) and is oriented such that the printed circuit boards (PCBs) of the PCBA 112 are perpendicular to the housing longitudinal axis 9. The second compartment 18(2) opens rearward to communicate with the space 18(4), whereas the third compartment 18(3) is separated from the space 18(4) by the fourth partitioning wall 44.

The second and third compartments 18(2) and 18(3) are in fluid communication via an opening 46 in the third partitioning wall 43 as discussed in detail below.

Referring to Figs. 1, 2 and 7-11, each of the two half shells 20, 21 of the saw housing 2 includes a housing rear inlet opening 28 formed in the rear end 4, whereby the saw housing 2 includes a pair of housing rear inlet openings 28. Each of the housing rear inlet openings 28 communicates with the saw housing interior space 18. In particular, each of the housing rear inlet openings 28 communicates with the gap 19 that is disposed between the rear end 4 and the first partitioning wall 41. As seen when the saw housing 2 is viewed from the rear, the rear end 4 includes surfaces 4(1) that are acutely angled relative to the housing longitudinal axis 9 which are joined by a central surface 4(2) that is perpendicular to the longitudinal axis 9. A housing rear inlet opening 28 is disposed on each of the angled surfaces 4(1) and includes a portion that extends into the central surface 4(2). As a result, each of the housing rear inlet openings 28 are correspondingly angled relative to the housing longitudinal axis 9.

The housing rear inlet openings 28 are each constituted by an array of closely-spaced, narrow slots 28a that are formed through the thickness of the rear end 4. The slots 28a extend laterally and the surfaces 28b of the slots 28a are parallel to a line that is normal to the rear end 4. By this configuration, air enters the interior space 18 via the slots 28a in a direction normal to the portion of the rear end 4 in which the housing rear inlet opening 28 is formed. The material between the slots 28a forms a grill configured to prevent material having dimensions greater than a width of the slot 28a from entering the interior space 18.

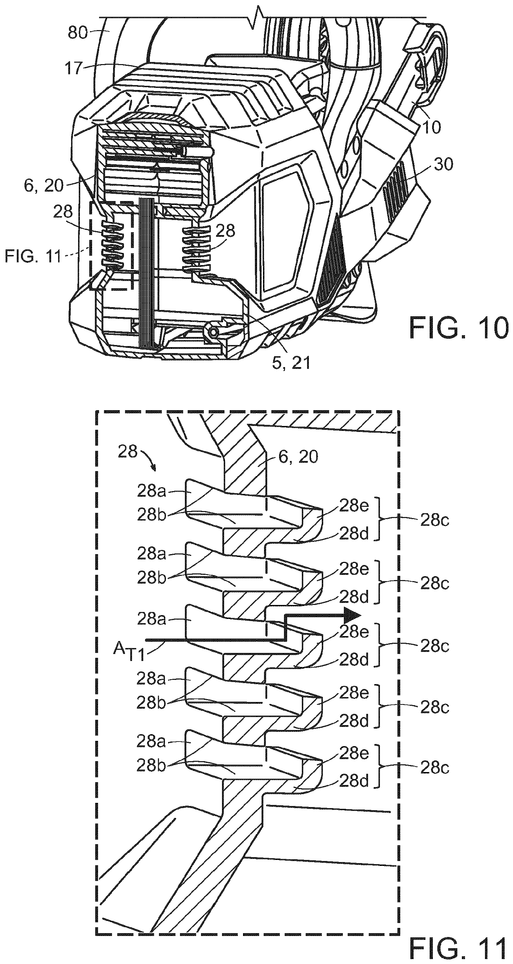

The slots 28a that form the housing rear inlet openings 28 each include a louver 28c that allows flow of air through the respective slot 28a but prevents or inhibits ingress of liquid into the saw housing 2. Each louver 28c protrudes inward from an inner surface of the saw housing 2 and includes a shelf portion 28d and a wall portion 28e. The shelf portion 28d is cantilevered from the housing 2 and is aligned with a lower surface 28b of the slot 28a. The shelf portion 28d may be perpendicular to the housing 2 or may be slightly angled relative to the housing 2 to promote flow of liquid toward the exterior of the housing 2. The wall portion 28e is disposed along the innermost edge of the shelf portion 28d and protrudes upward from the shelf portion 28d. In the illustrated embodiment, the wall portion 28e an upstanding structure having a height that is equal to or less than a height of the slot 28a. By this configuration, air flow entering the slots 28a is forced to travel a tortuous path to enter the saw housing 2. The tortuous path is represented by an arrow A_{T1} in Fig. 11. In addition, the wall portion 28e of each slot 28a provides a stop surface that blocks entry of liquid into the housing 2 and deflects liquid outward as guided by the shelf portion 28d.

Referring to Figs. 1, 2, 7 and 12-16, Each of the two half shells 20, 21 includes a housing side outlet opening 30. In particular, the housing side outlet openings 30 are formed in each respective first and second side 5, 6. Each of the housing side outlet openings 30 communicates with the saw housing interior space 18 and is disposed at a location between the front end 3 and the rear end 4 at a location corresponding to the outlet end 103(2) of the electric motor housing 103. In addition, each of the housing side outlet openings 30 is disposed at a location that is spaced apart from the third (top) and fourth (bottom) sides 7, 8.

The housing side outlet opening 30 of the right-side half shell 21 communicates with the second compartment 18(2) near the saw housing front end 3. The housing side outlet opening 30 of the left-side half shell 21 similarly located on the opposite side of the saw housing 2 and communicates with the third compartment 18(3).

Each housing side outlet opening 30 is constituted by a series of closely-spaced, narrow slots 30a. The material between the slots 30a forms a grill configured to prevent material having dimensions greater than a width of the slot 30a from entering the interior space 18. In the illustrated embodiment, the slots 30a extend at an acute angle relative to the vertical, for example, at a 30 degree angle relative to the vertical. However, in other embodiments, the slots 30a may extent vertically or horizontally.

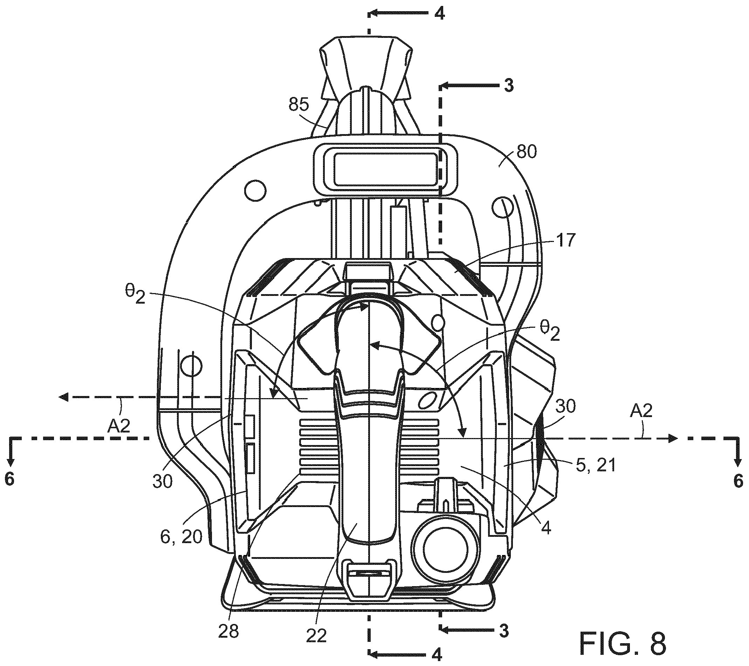

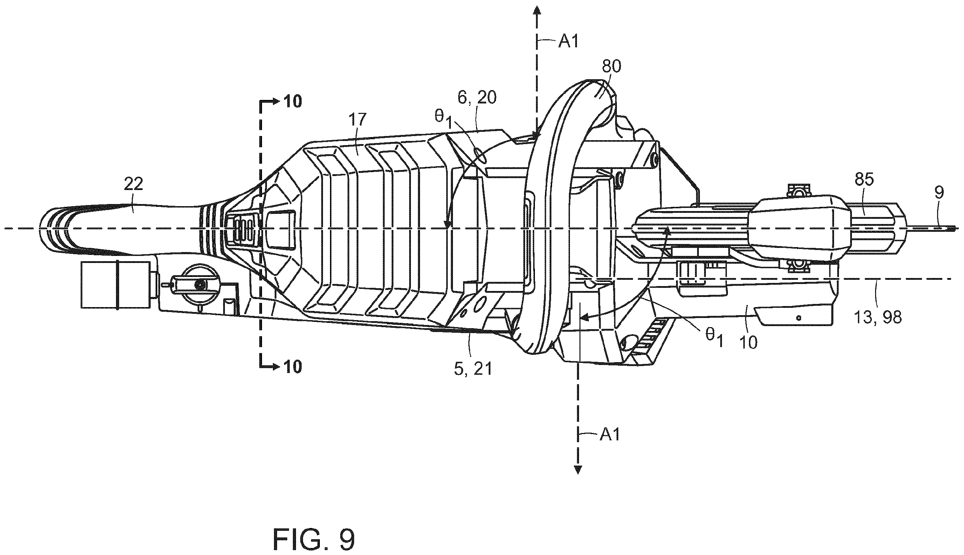

The slots 30a are formed through the thickness of the corresponding first and second side 5, 6 in such a way that the surfaces 30b of each of the slots 30a are parallel to a line that is normal to the portion of the respective first and second side 5, 6 in which the housing side outlet opening 30 is formed. By this configuration, air exits the interior space 18 via the slots 30a in a direction normal to the portion of the respective first and second side 5, 6 in which the housing side outlet opening 30 is formed. In particular, as seen in a top view of the cut-off saw 1 (Fig. 9), each housing side outlet opening 30 is configured to discharge air from the housing interior space 18 in a direction represented by arrow A1 that is at a first angle θ1 relative to the housing longitudinal axis 9. In the illustrated embodiment, the first angle θ1 is substantially perpendicular to the longitudinal axis 9, and thus is oriented so that air flowing out of each housing side outlet opening 30 is laterally-outwardly directed. In addition, as seen in a rear view of the cut-off saw 1 (Fig. 8), each housing side outlet opening 30 is configured to discharge air from the housing interior space 18 in a direction represented by arrow A2 that is at a second angle θ2 relative to the housing longitudinal axis 9. In the illustrated embodiment, the second angle θ2 is approximately 90 degrees to the housing longitudinal axis 9 so that air flowing out of each housing side outlet opening 30 is directed laterally.

The saw housing 2 includes housing features that are configured to prevent or inhibit entrance of liquid (i.e., water) into the interior space via the housing side outlet openings 30. The housing features include a shelf 32 disposed at each housing side outlet opening and housing wall portions 35 that cooperate with the shelf 32 to minimize water infiltration.

Each shelf 32 protrudes inward from an interior surface of each of the respective first and second sides 5, 6 of the saw housing 2 at a location corresponding to the housing side outlet openings 30. Each shelf 32 has a proximal end 33 that adjoins the respective housing side 5, 6 and a distal end 34 that is opposite the proximal end 33 and is spaced apart from the respective housing side 5, 6. The distal end 34 of each shelf 32 adjoins, or is closely spaced with respect to, a housing wall portion 35 that faces the housing side outlet opening 30.

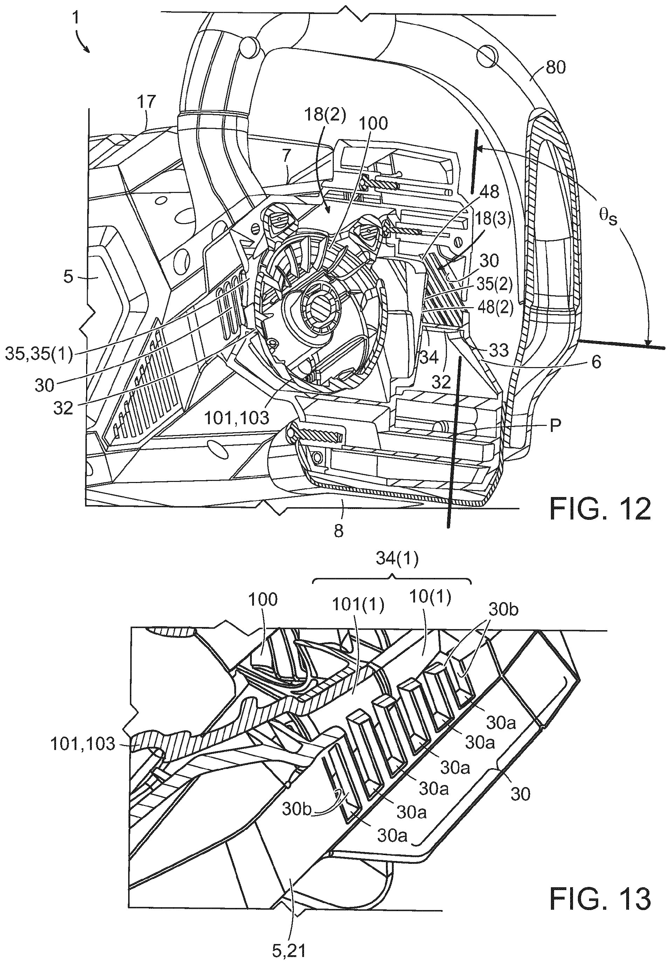

The shelf 32 is cantilevered from the housing 2. The shelf 32 may be perpendicular to the housing 2 or may be slightly angled relative to the housing 2 to promote flow of liquid toward the exterior of the housing 2. In some embodiments, the shelf 32 extends at a shelf angle θs relative to the first side, and the shelf angle θs is an acute angle relative to a plane P that includes the housing side outlet opening 30 (Fig. 12).

The shelf 32 is disposed between the respective housing side outlet opening 30 and the fourth (bottom) side 8. In the illustrated embodiment, the shelf 32 is aligned with a lower edge of the grill defined by the slots 30a.

In addition to the shelf 32, the housing features that are configured to prevent or inhibit entrance of liquid into the interior space include the facing wall portion 35. The facing wall portion 35 extends upward relative to the shelf distal end 34 toward the housing third (top) side 7. By this configuration, the facing wall portion 35 provides a stop surface or shield that inhibits (e.g., blocks or partially blocks) entry of liquid into the housing 2 and deflects liquid outward as guided by the shelf 32. In some embodiments, the wall portion 35 is integral with the shelf distal end 34, while in other embodiments, the wall portion 35 is a separate structural element that is closely adjacent to the shelf distal end 34.

With respect to the housing side outlet opening 30 provided in the right-side half shell 21 (e.g., in the first side 5), the facing wall portion 35(1) is constituted in part by a wall portion 101(1) of the motor housing 101 and in part by a protruding wall portion 10(1) of the support arm 10. The support arm protruding wall portion 10(1) cooperates with the motor housing wall portion 101(1) to provide a substantially continuous surface that faces the housing side outlet opening 30 with no intervening structures. In the illustrated embodiment, the facing wall portion 35(1) has a surface area of at least the size of the area of the housing side outlet opening 30 that it faces.

With respect to the housing side outlet opening 30 provided in the left-side half shell 20 (e.g., in the second side 6), the facing wall portion 35(2) is constituted in part by a portion 43(2) of the third partitioning wall 43 and in part by a portion 48(2) of an exterior surface of a baffle 48 that protrudes from the third partitioning wall 43 toward the second side 6. The baffle 48 is tubular, has a generally rectangular cross-sectional shape and defines an enclosed path that redirects air flow therethrough through a ninety degree change in direction. Although they are relatively offset, the portion 43(2) of the third partitioning wall 43 and the portion 48(2) of the exterior surface of a baffle 48 each face the housing side outlet opening 30 with no intervening structures. In combination, the portion 43(2) of the third partitioning wall 43 and the portion 48(2) of the exterior surface of a baffle 48 that constitute the facing wall portion 35 has a surface area of at least the size of the area of the housing side outlet opening 30 that it faces.

Thus, the housing side outlet opening 30 of each of the first and second sides 5, 6 includes a shelf 32 and a facing wall portion 35 that provides a stop surface that blocks or partially blocks entry of liquid into the housing 2 and deflects liquid outward as guided by the shelf 32.

As further regards the housing side outlet opening 30 provided in the second side 6, the baffle 48 encloses the opening 46 in the third partitioning wall 43 and opens facing the rear end 4. In effect, the baffle 48 provides an enclosed passageway that redirects airflow from the second compartment 18(2) to the third compartment 18(3) through a ninety degree turn. In particular, air flow discharged from the motor fan 100 exits the second compartment 18(2) laterally via the opening 46 in the third partitioning wall 43 and is redirected to flow in a longitudinal direction by the baffle 48, which opens facing the fourth partitioning wall 44. Air flow exiting the baffle 48 impinges on the fourth partitioning wall 44 and is again redirected by the fourth partitioning wall 44 to flow toward the front end 3 and toward the outlet opening 30 of the housing second side 6. By this configuration, the third partitioning wall 43, the fourth partitioning wall 44 and the baffle 48 cooperate to define a tortuous air flow path between the housing side outlet opening 30 of the second side 6 and the second compartment 18(2) which houses the motor 101. The tortuous path is represented by an arrow A_{T2} in Fig. 7.

Although the housing side outlet openings 30 are illustrated herein as being free of louvers, in some embodiments the housing side outlet openings 30 may include louvers that are similar to the louvers 28c provided for the housing rear inlet openings 28.

Although the illustrated embodiment of the saw housing 2 includes a single pair of housing rear inlet openings 28 and a single pair of housing side outlet openings 30, the saw housing 2 is not limited to these openings. In some embodiments, additional inlet and/or outlet openings may be provided. Possible locations for such openings are indicated by faux openings 29, 31. The faux openings 29, 31 have a similar appearance to the housing side outlet openings 30 but do not include through-openings and therefore do not provide fluid communication between the housing interior space 18 and the environment of the saw 1.

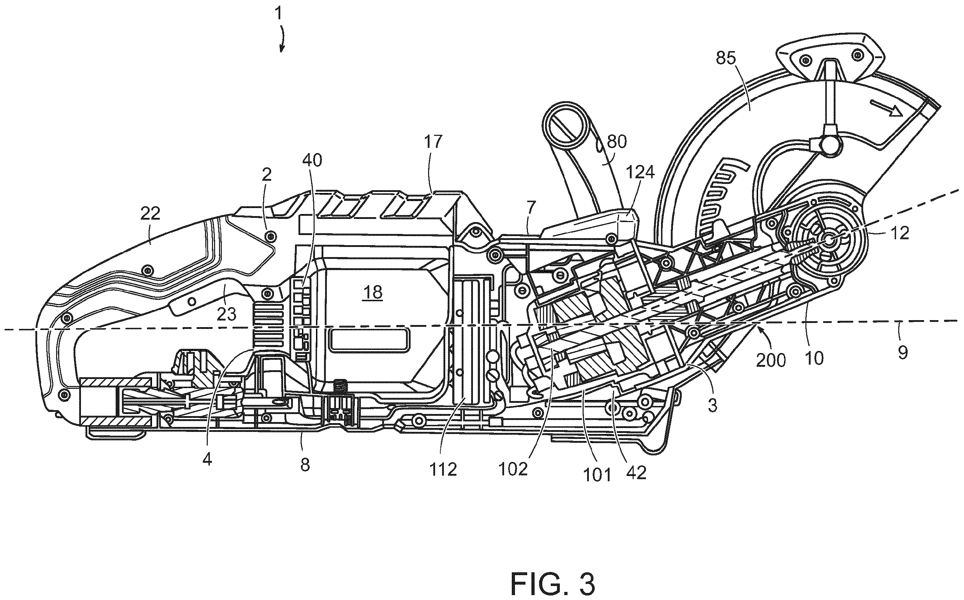

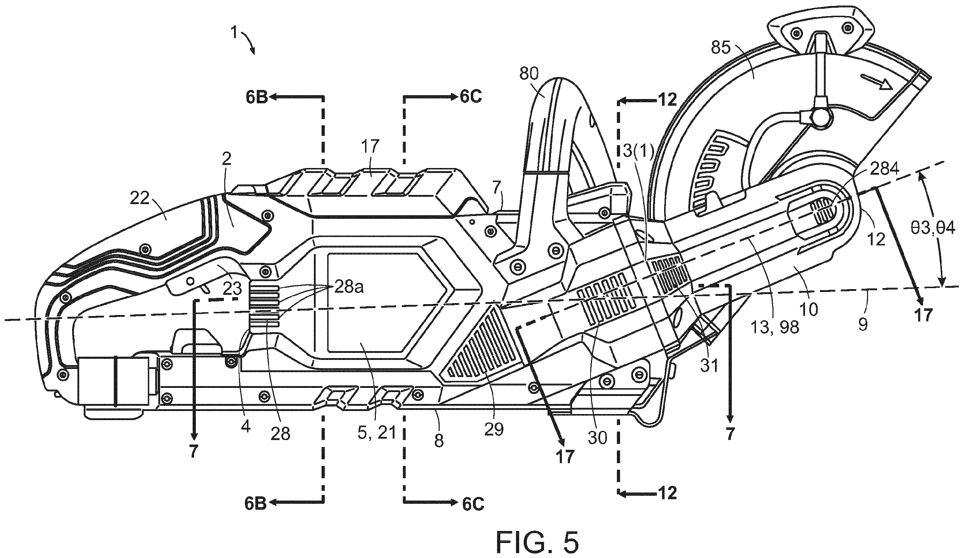

Referring to Figs. 3, 5 and 9, the right side half shell 21 includes the support arm 10 that protrudes from the front end 3 of the saw housing 2 in a direction opposite that of the main handle 22. The support arm 10 is a hollow, elongated structure that includes a proximal end 11 that is joined to or integral with the front end 3, and a distal end 12 that is opposite the proximal end 11 and supports the cutting blade 90. The support arm 10 includes a support arm axis 13 that extends between the proximal and distal ends 11, 12. Although the proximal end 11 joins the front end 3 at a mid-height of the saw housing 2, the distal end 12 resides above the proximal end 11 such that the support arm axis 13 is angled relative to the saw housing longitudinal axis 9. In particular, as seen in a top view of the cut-off saw 1 (Fig. 9), the support arm axis 13 extends outward from the front end 3 in parallel to the housing longitudinal axis 9. In addition, as seen in a side view of the cut-off saw 1 (Fig. 5), the support arm axis 13 extends at an acute third angle θ3 relative to the housing longitudinal axis 9. In the illustrated embodiment, the third angle θ3 is approximately thirty degrees, but is not limited to this angle.

The proximal end 11 of the support arm 10 includes a base plate 11(1) that cooperates with the half shells 20, 21 to define the saw housing front end 3. The base plate 11(1) may be secured to the half shells 20, 21 for example using fasteners or alternatively may be integrally formed with one of the half shells 20, 21. The support arm 10 includes the protruding wall portion 10(1) that extends into the second compartment 18 at a location that is between the housing first side 5 and the blade drive assembly 200. In the illustrated embodiment, the protruding wall portion 10(1) is shaped and dimensioned to be received in, and fully obstruct, a recess 103(3) of a housing 103 of the motor 101. More specifically, the protruding wall portion 10(1) is configured to be received in a recess 103(3) that faces the housing first side 5. As previously discussed, the protruding wall portion 10(1) serves as a shield and cooperates with the motor housing 103 to form a facing wall portion 35 that inhibits the flow of liquid into the saw housing 2.

In the illustrated embodiment, the cut-off saw 1 also includes an auxiliary handle 80 that is connected to the saw housing 2 between the front and rear ends 3, 4. The main handle 22 and the auxiliary handle 80 provide grip areas to facilitate two-handed operation of the cut-off saw 1. The auxiliary handle 80 is a curved bar that wraps around three sides of the cut-off saw 1. In particular, the auxiliary handle 80 includes an auxiliary handle first end 81 that is joined to the saw housing first side 5 (e.g., one lateral side of the saw housing 2) and an auxiliary handle second end 82 that is joined to the saw housing second side 6 (e.g., the opposed lateral side of the saw housing 2). A mid-portion 83 of the auxiliary handle 80 is disposed between the auxiliary handle first and second ends 81, 82 and overlies the saw housing third side 7 (e.g., a top side of the saw housing 2). The auxiliary handle first and second ends 81, 82 are joined to the sides 5, 6 of the saw housing 2 at a location that is longitudinally disposed between the housing side inlet opening 29 and the housing side outlet opening 30. The auxiliary handle first end 81 is joined to the first side 5 of the saw housing 2 at a location that is closer to the third side 7 than to the fourth side 8, and the auxiliary handle second end is joined to the second side 6 of the saw housing 2 at a location that is closer to the fourth side 8 than the third side 7.

Referring to Figs. 3-5, 7, 9 and 14, the battery pack 116 is disposed in the first compartment 18(1) and is detachably connected to a battery mount that is located inside the first compartment 18(1). The battery mount mechanically interconnects the battery pack 116 to the first compartment 18(1). The battery mount also includes electrical terminals (not shown) that electrically connect with corresponding electrical terminals on the battery pack 116 during insertion of the battery pack 116 into the first compartment 18(1). The illustrated battery pack 116 is a power tool battery pack having a plurality of rechargeable battery cells 117. The battery cells 117 may be lithium-based or have any other suitable chemistry.

The electric motor 101 is disposed in the second compartment 18(2). The electric motor 101 may be a brushless direct-current motor but is not limited to this type of motor. Operation of the motor 101 is controlled by the controller. The electric motor 101 is housed in a generally cylindrical motor housing 103. The motor housing 103 is supported by the saw housing 2 in an angled orientation relative to the housing longitudinal axis 9 and is fixed in this orientation by fasteners received in mounting bosses 103(1) formed in a first end (e.g., outlet end) 103(2) of the motor housing 103. The motor housing 103 includes a recess 103(3) between the bosses 103(1) of each adjacent pair of bosses. In the illustrated embodiment, the motor housing 103 includes four bosses 103(1) and four recesses 103(3), whereby the motor housing first end 103(2) has a scalloped appearance. In other embodiments, a greater or fewer number of bosses 103(1) may be employed.

The output shaft 102 of the motor 101 protrudes from the motor housing first end 103(2) and rotates about an output shaft axis 98 that is aligned with the support arm axis 13. As seen in a top view of the cut-off saw 1 (Fig. 9), the output shaft axis 98 extends toward the front end 3 in parallel to the housing longitudinal axis 9. In addition, as seen in a side view of the cut-off saw 1 (Fig. 5), the output shaft axis 98 extends at an acute fourth angle θ4 relative to the housing longitudinal axis 9. In the illustrated embodiment, the fourth angle θ4 is approximately thirty degrees to correspond to the angle of the support arm axis 13.

A motor fan 100 is mounted on the output shaft 102 at a location between the electric motor 101 and the housing front end 3. The motor fan 100 rotates in concert with the output shaft 102 and draws air through a housing 103 of the motor 101. The motor fan 100 also enhances air flow within the housing interior space 18 by drawing air from the rear end 4 toward the front end 3 as discussed in further detail below. In the illustrated embodiment, the bosses 103(1) of the motor housing 103 surround an outer periphery of the motor fan 100. Although the recess 103(3) that faces the housing first side 5 and the housing side outlet opening 30 is obstructed by the protruding wall portion 10(1), the remaining recesses 103(3) are unobstructed. By this configuration, the remaining recesses 103(3) of the motor housing 103 (e.g., three of the four recesses 103(3)) permit air exhausted by the motor fan to exit the motor housing 103 in a direction perpendicular to the output shaft axis 98.

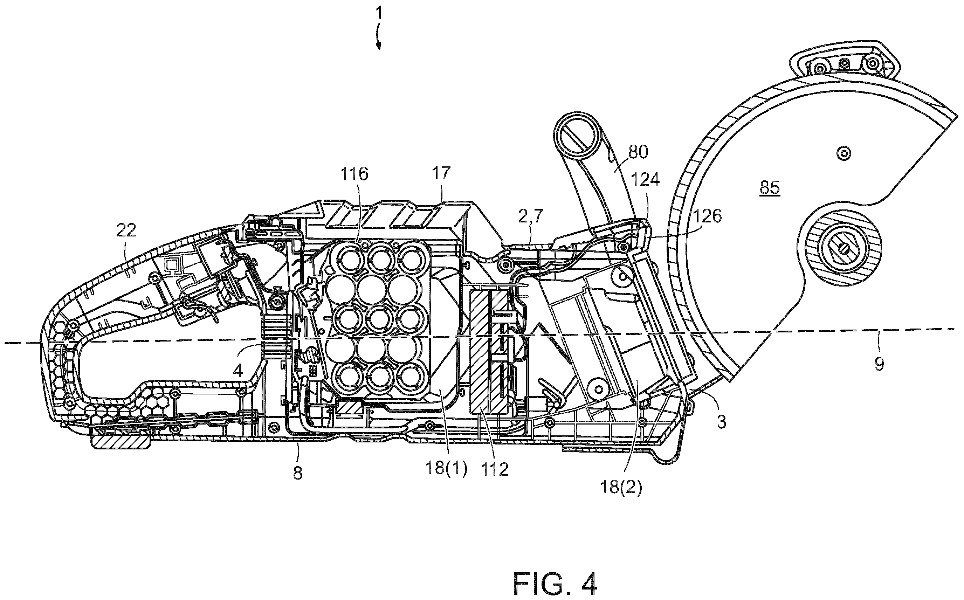

Referring to Figs. 4 and 7, the PCBA 112 is a completed printed circuit board assembly that includes the PCB and contains the controller and other electronic components needed to make the board function as required. The PCBA 112 is mounted on a heat sink 114. The PCBA 112 and the heat sink 114 are disposed in the space 18(4) and are supported therein via a PCBA holder 113 in such a way that the PCB resides in a plane that is perpendicular to the housing longitudinal axis 9. The heat sink 114 is a thermally conductive plate that is joined to the rear-facing surface of the PCBA 112. The heat sink 114 includes cooling fins 115 that extend in a direction parallel to the first and second (lateral) sides 5, 6 and protrude toward the rear end 3.

In the illustrated embodiment, the PCBA holder 113 is supported via a fifth partitioning wall 45 that extends laterally between the PCBA holder 113 and the first and second sides 5, 6 of the saw housing 2. The fifth partitioning wall 45 is parallel to the first and second partitioning walls 41, 42, and disposed in the space 18(4) between the second partitioning wall 42 and the fourth partitioning wall 44.

In the illustrated embodiment, the motor 101 and the battery pack 116 together form a high power battery-powered system. For example, in some embodiments, the motor 101 and the battery pack 116 are operable to produce a high power output. For example, the motor 101 and the battery pack 116 may produce a peak power of 1800 watts (W) to 2400 W or more (2.4 horsepower (hp) to 3.0 hp or more). This power output is equal to or greater than the power output of some single-cylinder internal combustion engines typically used in cut-off saws.

Referring to Figs. 1-3, a trigger 23 for operating the cut-off saw 1 is located on the main handle 22. The trigger 23 is configured so that a user may depress the trigger 23 using fingers of the hand which grips the main handle 22, whereby the electric motor 101 is actuated.

The cut-off saw 1 includes a human machine interface (HMI) 120 to assist a user in operating the cut-off saw 1. In the illustrated embodiment, the HMI includes a battery charge level display 122 surrounded by a sturdy protective frame 124. The HMI 120 is positioned on the saw housing 2 within a line of sight of a user during operation of the cut-off saw 1. For example, the HMI 120 may be positioned on the third side (top) of the saw housing 2 between the battery cover (detachable lid) 17 and the front end 3.

In other embodiments, the HMI may alternatively, or additionally, include a liquid crystal display (LCD) screen that is surrounded by the sturdy protective frame 124. The LDC screen may display the battery charge level and/or other information of interest to the saw user, including but not limited to indication of an amount of power being used by the cut-off saw 1 during operation (i.e., an amount of current being drawn from the battery pack 116 or other operational information. In other embodiments, the HMI 120 may be positioned on other locations on the saw housing 2.

The cut-off saw 1 also includes a light source 126 provided on a forward-facing surface of the protective frame 124. The light source 126 may include one or more light emitting diodes (LEDs) that are arranged to illuminate the work area in front of the saw and/or a work piece disposed in this area.

Referring to Figs. 3, 15 and 17-18, the support arm 10 houses a blade drive assembly 200. The blade drive assembly 200 is a belt-free drive system that includes four subassemblies 202, 222, 262, 282 that cooperate to transmit the rotational output of the electric motor 101 to the cutting blade 90. The first subassembly is an intermediate drive assembly 202 disposed in the support arm 10 between the proximal and distal ends 11, 12. The second, third and fourth subassemblies 222, 262, 282 are disposed in the support arm distal end 12. The second subassembly is a blade connection assembly 262 that is used to connect the cutting blade 90 to the support arm distal end 12. The third subassembly is a gear set 222 that connects the intermediate drive assembly 202 to the blade connection assembly 262 and reduces the rotational speed of the motor output shaft 102. The fourth subassembly is a spindle lock assembly 282 that is operable to selectively engage with the gear set 222 to prevent movement of the gear set during attachment and detachment of the cutting blade 90. Each of the four subassemblies 202, 222, 262, 282 will now be described in detail.

The intermediate drive assembly 202 provides a mechanical connection between the motor output shaft 102 and the gear set 222. The intermediate drive assembly 202 includes an elongated intermediate shaft 207 and a shaft coupling 203. The shaft coupling 203 joins the motor output shaft 102 to one end of the intermediate shaft 207 via a driver pinion 204 that is interposed between the one end and the shaft coupling 203. As a result, the intermediate shaft 207 rotates coaxially with the motor output shaft 102 about the output shaft axis 98. A beveled pinion gear 209 is disposed on an opposite end of the intermediate shaft 207. The pinion gear 209, which joins the intermediate drive assembly 202 to the gear set 222, is retained on the intermediate shaft 207 via a nut 210. The intermediate shaft 207 is supported at each end with respect to the support arm via bearings 206, 208.

The gear set 222 together with the intermediate drive assembly 202 provides a transmission 216 that transmits rotational motion of the motor output shaft 102 to the blade connection assembly 262. The gear set 222 includes a spindle 233 that is rotatable about a spindle axis 235 that extends in a direction that is perpendicular to the support arm axis 13. The first end 233(1) of the spindle 233 is supported relative to the support arm 10 via a needle roller bearing 223 and a midportion 233(3) of the spindle 233 is supported relative to the support arm 10 via a ball bearing 227. The spindle includes a second end 233(2) that is opposite the first end 233(1). The spindle second end 233(2) protrudes from the support arm 10 in a lateral direction, e.g., it protrudes toward a left side of the cut off saw 1. The end face of the spindle second end 233(2) includes a threaded blind bore 233(11) that is configured to engage the threads (not shown) of a bolt 268 of the blade connection assembly 262.

In addition, the spindle 233 has a non-uniform diameter. In particular, the spindle 233 has a maximum diameter portion 233(6) that includes the spindle second end 233(2), a minimum diameter portion 233(8) that includes the spindle first end 233(1) and an intermediate diameter portion 233(7) that includes the spindle midportion 233(3). In addition, the spindle 233 includes a first shoulder 233(9) at the transition between the minimum diameter portion and the intermediate diameter portion, and a second shoulder 233(10) at the transition between the intermediate diameter portion and the maximum diameter portion.

The outer circumferential surface of the spindle maximum diameter portion 233(6) includes a pair of opposed spindle flats 233(4) that are used to engage corresponding flange flats 264(3), 266(3) provided on an inner circumferential surface of each of a pair of flange plates 264, 266 of the blade connection assembly 262. The spindle 233 includes an annular protrusion 233(5) that is disposed in the spindle maximum diameter portion 233(6) at a location that is closer to the second shoulder 233(10) than the spindle second end 233(2).

The gear set 222 includes a beveled driven gear 225 that surrounds and is connected to the spindle intermediate diameter portion 233(7) via, for example, internal splines (not shown). As a result, driven gear 225 is rotatable about the spindle axis 235 in concert with the spindle 233. External teeth (not shown) of the driven gear 225 engage with corresponding teeth (not shown) of the bevel pinion gear 209 whereby the driven gear 225 is driven by the intermediate shaft 207. The driven gear 225 is retained adjacent to the bearing 227 via a circlip 224 that surrounds the spindle 233.

The driven gear 225 has a first gear face 225(1) that faces away from the cutting blade 90 and a second gear face 225(2) opposite the first gear face 225(1) and that faces the cutting blade 90. The first gear face 225(1) includes at least one recess, for example a blind hole 225(3) that is dimensioned to receive a locking pin 294 that is part of the spindle lock assembly 282, as discussed further below. In the illustrated embodiment, the first gear face 225(1) includes three blind holes 225(3) that are equidistantly spaced apart along a circle that surrounds the spindle 233. The gear second face 225(2) defines a collar portion 225(4) that protrudes in a direction parallel to the spindle axis 235. An inner surface of the collar portion 225(4) confronts an outer surface of the spindle 233.

The ball bearing 227 that surrounds the spindle intermediate diameter portion 233(7) is disposed between an end face 225(5) of the bevel gear collar portion 225(4) and the spindle second shoulder 233(10). More specifically, the ball bearing 227 is retained against the spindle second shoulder 233(10) via a circlip 226. The ball bearing 227 supports the spindle 233 with respect to a gear case cover 230, an inner surface of which includes a groove that receives the circlip 226. An annular seal 232 is disposed between a cutting blade-facing surface of the ball bearing 227 and the spindle annular protrusion 233(5).

A retaining plate 239 surrounds the spindle annular protrusion 233(5) and is secured to an end face 230(1) of the gear case cover 230 via fasteners. The retaining plate 239 has a larger diameter than the gear case cover end face 230(1), and an inner periphery of the blade guard 85 is clamped between a surface 239(1) of the retaining plate 239 and a surface 230(2) of the gear case cover 230 via intermediate blade guard O-rings 236, 237 in such a way that the blade guard 85 is rotatable relative to the gear case cover 230 and the retaining plate 239. The blade guard O rings 236, 237 and another O-ring 229 that is disposed between the gear case cover 230 and an inner surface of the support arm 10 cooperate to prevent moisture and debris from entering the gear set 222.

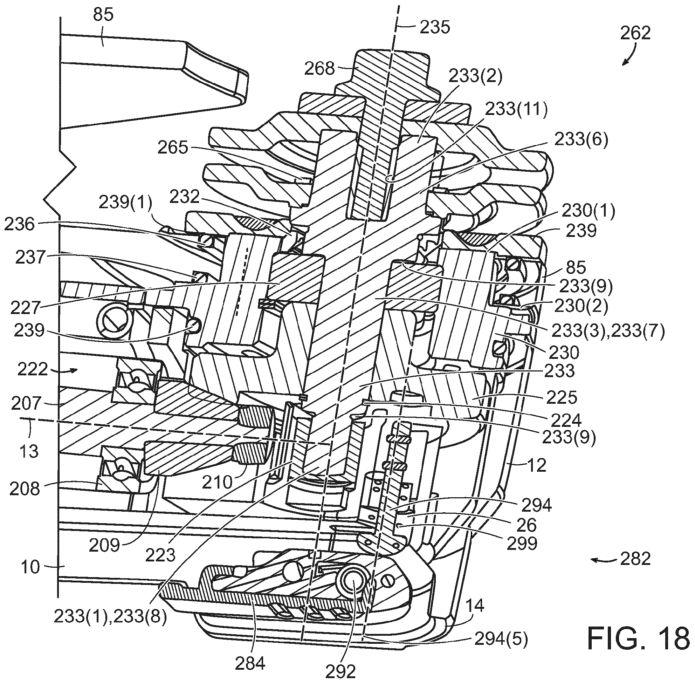

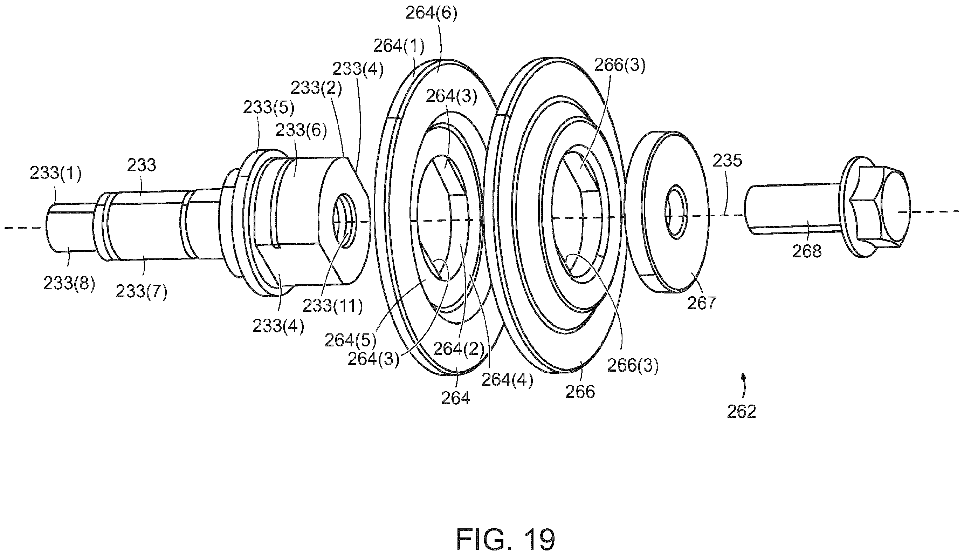

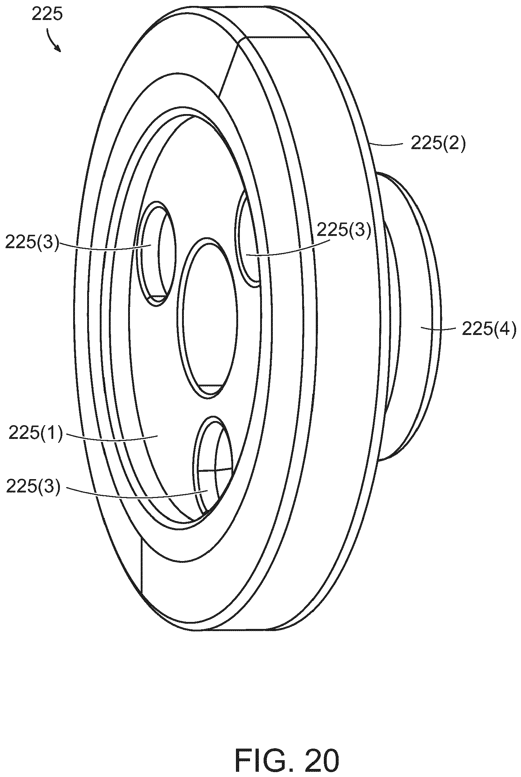

Referring to Figs. 18-20, the blade connection assembly 262 is supported on the spindle second end 233(2). The blade connection assembly 262 includes the pair of flange plates 264, 266, which consist of an inner flange plate 264 that is retained against a side of the spindle annular protrusion 233(5) via a circlip 265 and an outer flange plate 266. Each of the inner and outer flanges 264, 266 have substantially the same shape and dimensions, so only the inner flange plate 264 will be described in detail.

The inner flange plate 264 is a thin plate having a circular outer peripheral edge 264(1) and a central opening 264(2). The central opening 264(2) is configured to have the same shape and dimensions as the spindle maximum diameter portion 233(6), which is received therethrough in a clearance fit. In particular, the central opening 264(2) includes opposed flange flats 264(3) that are configured to engage with the spindle flats 233(4) formed on the spindle maximum diameter portion 233(6). By this configuration, each of the inner and outer flanges 264, 266 rotate in concert with the spindle 233.

When the inner flange plate 264 is seen in a side view, the central portion 264(4) including the central opening 264(2) is offset relative to the outer peripheral edge 264(1). As a result, the inner flange plate 264 has a central concavity 264(5) that is surrounded by a rim 264(6). The rim 264(6) is parallel to the central portion 264(4).

In use, the inner flange plate 264 is disposed on the spindle maximum diameter portion 233(6) in an orientation in which the central portion 264(4) abuts the spindle annular protrusion 233(5) and the central concavity 264(5) opens facing the spindle second end 233(2). The inner flange plate 264 is retained against the spindle annular protrusion 233(5) by a circlip 265 disposed in a groove of the spindle 233. The outer flange plate 266 is disposed on the spindle maximum diameter portion 233(6) in an opposite orientation in which the central concavity 266(5) opens facing the spindle first end 233(1). By this configuration, the rims 264(6), 266(6) of the respective inner and outer flange plates 264, 266 face each other. In use, the cutting blade 90 is mounted on the spindle 233 between the respective inner and outer flange plates 264, 266. The blade connection assembly 262 includes a bolt 268 that is received in the bore 233(11) and a washer 267 that is disposed on a shank of the bolt 268. In use, the bolt 268 and washer 267 are used to retain the outer flange plate 266 on the spindle 233. With sufficient tightening of the bolt 268 in the bore 233(11), the cutting blade 90 is securely clamped between the respective rims 264(6), 266(6) of the inner and outer flange plates 264, 266 and the rotation of the spindle 233 is transferred to the cutting blade 90.

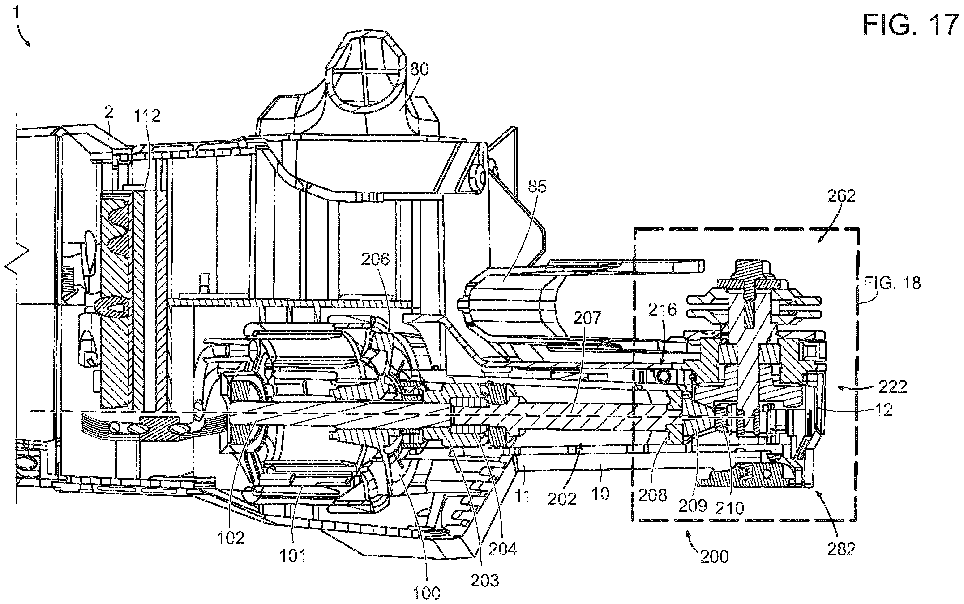

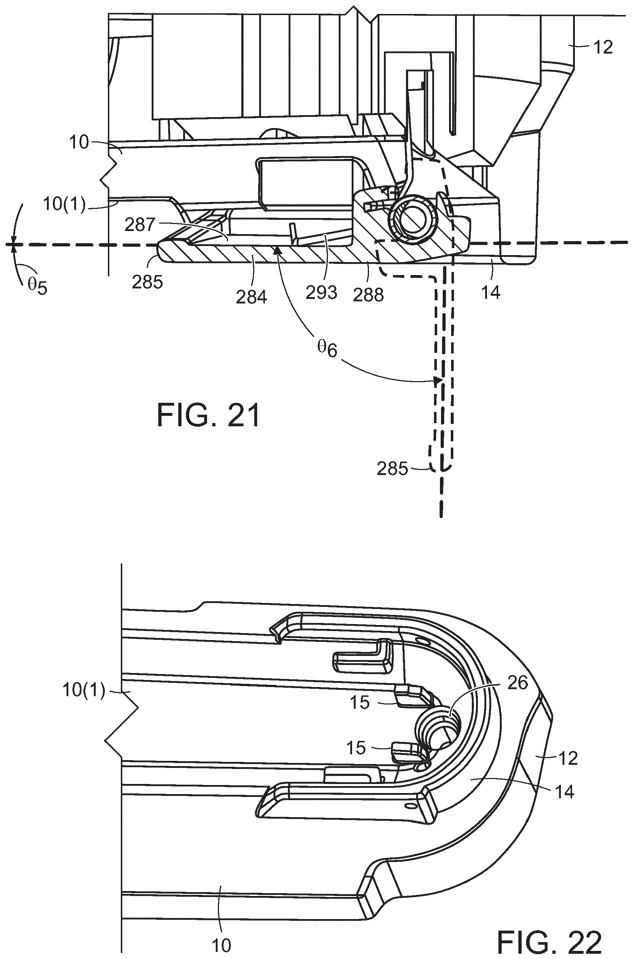

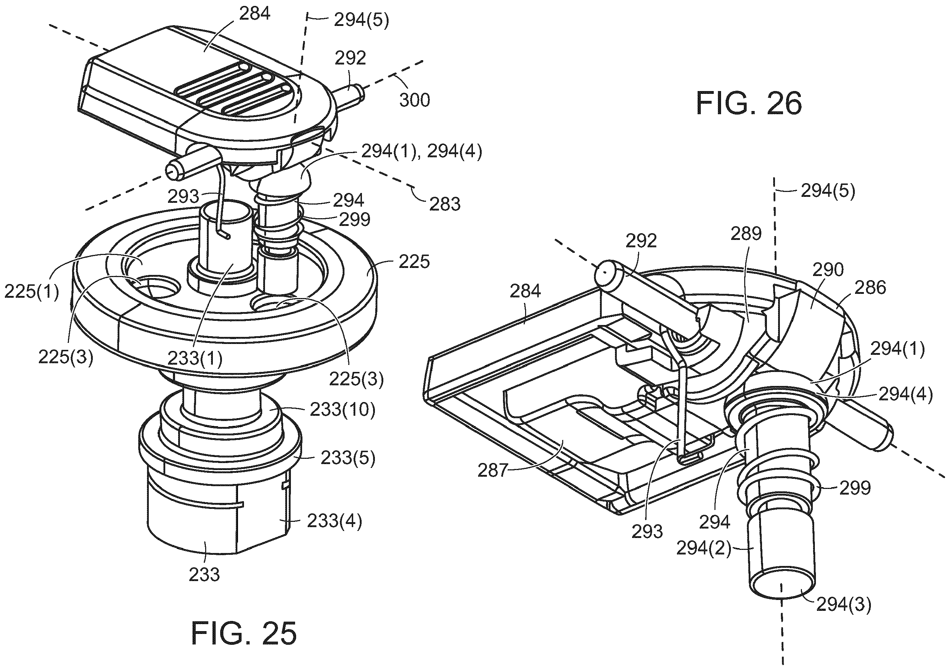

Referring to Figs. 17-18 and 21-26, the spindle lock assembly 282 is supported on the support arm 10 adjacent to the spindle first end 233(1). The spindle lock assembly 282 includes a lock handle 284 that is pivotably mounted on the outer surface of the support arm 10 at the support arm distal end 12. The support arm 10 includes a curved ridge 14 that protrudes from outer surface of the lateral side of the support arm 10. The ridge 14 is U-shaped and surrounds the lock handle on three of four sides. In some orientations of the lock handle 284, the ridge 14 protrudes to an extent that the lock handle 284 is slightly recessed with respect to the ridge 14, whereby the ridge 14 provides structural protection of the lock handle 284 from impact during saw transport or operation. The lock handle 284 is connected to the support arm 10 via a pivot pin 292 that is supported on the ridge 14. The lock handle 284 is configured to actuate a locking pin 294 for movement relative to the support arm 10, as will now be described in detail.

The lock handle 284 is a rigid plate that is shaped and dimensioned to grasped between fingers and thumb of the user's hand. The lock handle 284 overlies an outer, lateral-side surface of the support arm 10. In the illustrated embodiment, the lock handle is disposed on a side of the support arm 10 opposite the cutting blade 90. The lock handle 284 includes a handle first end 285 and a handle second end 286 opposite the handle first end 285. The lock handle 284 includes a handle longitudinal axis 283 that extends between the handle first and second ends 285, 286. In the illustrated embodiment, the lock handle 284 is elongated in a direction parallel to the handle longitudinal axis 283, but is not limited to this configuration. The lock handle 284 includes a broad handle inner surface 287 that faces the outer surface of the support arm 10. In addition, the lock handle 284 includes a broad handle outer surface 288 that is opposite the handle inner surface 287 and faces away from the support arm 10. The handle inner and outer surfaces 287, 288 extend between the handle first and second ends 285, 286.

The lock handle 284 includes a through opening 291 that is shaped and dimensioned to receive the pivot pin 292. The through opening 291 is disposed closer to the handle second end 286 than the handle first end 285. In the illustrated embodiment, through opening 291 is generally parallel to the inner and outer surfaces 287, 288 of the lock handle 284 and is perpendicular to the handle longitudinal axis 283 and the spindle axis 235.

The spindle lock assembly 282 includes the pivot pin 292 that connects the lock handle 284 the support arm 10. The pivot pin 292 is disposed in the through opening 291. The pivot pin 292 is of sufficient length that opposed ends of the pivot pin 292 protrude from opposed sides of the lock handle 284 and are supported on opposed portions of the support arm ridge 14. In use, the lock handle 284 pivots about the pivot pin 292, whereby the pivot pin 292 defines a pivot pin rotational axis 300.

The spindle lock assembly 282 includes a torsion spring 293 which is configured to bias the lock handle 284 toward a first, folded orientation relative to the support arm 10. The torsion spring 293 encircles the pivot pin 292, and opposed ends of the torsion spring 293 are secured to the lock handle 284 and the support arm 10, respectively.

The lock handle 284 includes a pair of bearing ridges 289 that protrude from the handle inner surface 287. Each bearing ridge 289 underlies the through opening 291 and is elongated in a direction parallel to the handle longitudinal axis 283. The bearing ridges 289 are spaced apart from each other in a direction parallel to the pivot pin rotational axis 300. Each bearing ridge 289 defines a curved bearing surface 289(1) which is supported on a correspondingly curved surface of a post 15 protruding from the support arm outer surface 10(2).

The lock handle 284 includes a cam surface 290 that is formed at the handle second end 286. The cam surface 290 is a curved, outwardly convex surface. In the illustrated embodiment, the cam surface 290 extends from the handle outer surface 288 to a location between the bearing ridges 289 on the handle inner surface 287. The cam surface 290 is configured to engage with the locking pin 294 and to drive the locking pin 294 to translate relative to the support arm 10 based on a rotational orientation of the lock handle 284 about the pivot pin rotational axis 300, as discussed in further detail below.

The handle outer surface 288 may include surface features 288(1) that enhance manual gripping. For example, the handle outer surface 288 may include channels (shown), ridges, knurling, dimpling or other features. In the illustrated embodiment, a central portion 288(2) of the handle outer surface is slightly recessed and the channels 288(1) are located in the central portion 288(2).

The spindle lock assembly 282 further includes the locking pin 294. The locking pin 294 includes a head 294(1) and an elongated shank 294(2) that protrudes from the head 294(1). The shank 294(2) has a terminal end 294(3) opposite the head 294(1). The surface 294(4) of the head 294(1) on a side opposite the shank 294(2) is convex and curved. In the illustrated embodiment, for example, the surface 294(4) has a hemispherical shape. The locking pin 294 has a longitudinal axis 294(5) that extends through the head 294(1) and the shank terminal end 294(3). The locking pin 294 is disposed within an opening 26 of the support arm 10 and is oriented so that the locking pin longitudinal axis 294(5) is parallel to and offset from the spindle axis 235 and so that the locking pin longitudinal axis 294(5) passes through the driven gear 225 at a location between spindle 233 and the bevel gear teeth (Fig. 12). In particular, in certain rotational orientations of the driven gear 225, the locking pin longitudinal axis 294(5) is aligned with a hole 225(3) of the driven gear 225. The locking pin 294 may translate within the support arm opening in a direction parallel to the longitudinal axis 294(5).

The spindle lock assembly 282 further includes a compression spring 299 that surrounds the locking pin shank 294(2). One end of the compression spring abuts the head 294(1) and an opposed end of the compression spring 299 abuts an inner surface of the support arm 10. By this configuration, the compression spring 299 applies a force to the head 294(1) of the locking pin 294 that urges the locking pin 294 against the cam surface 290 of the lock handle 284, e.g., urges the locking pin 294 out of engagement with the hole 225(3) of the driven gear 225. As a result of the spring force of the compression spring 299, the locking pin head 294(1) is maintained in direct contact with the cam surface of the lock handle 284 regardless of the orientation of the lock handle 284 about the pivot pin 292.

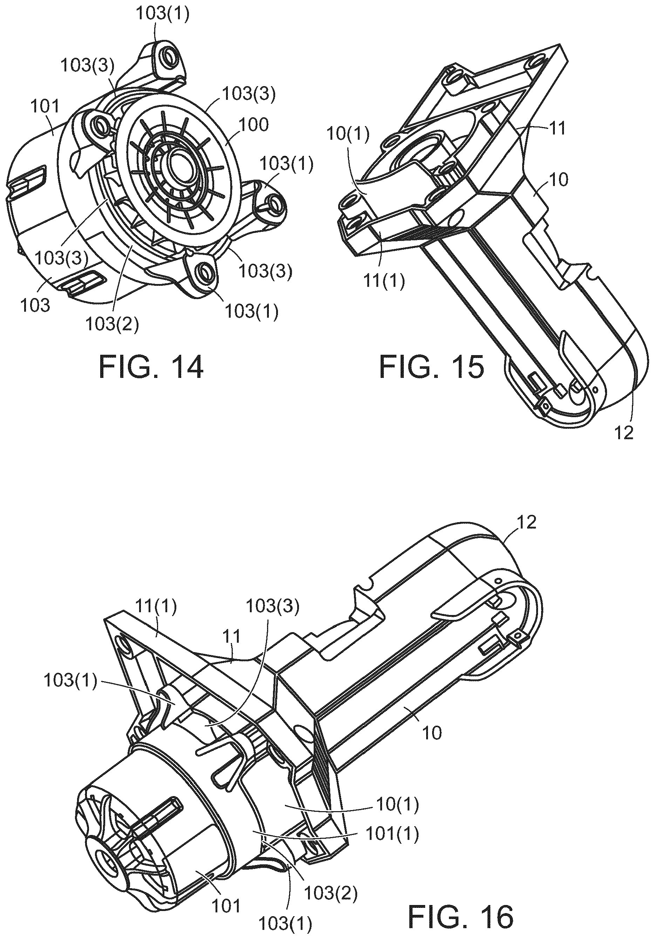

The lock handle 284 is rotatable about the pivot pin 292 between a first, folded position (Fig. 15, shown in solid lines) and a second, unfolded position (Fig. 15, shown in broken lines). When the lock handle 284 is in the first position, the handle longitudinal axis 283 is at a first handle angle θ5 relative to the support arm outer surface. In the illustrated embodiment, when the lock handle 284 is in the first position, the longitudinal axis 283 of the lock handle 284 is oriented to be substantially parallel to the outer surface 10(2) of the support arm 10. In other words, the first handle angle θ5 is zero degrees or substantially zero degrees (e.g., within plus or minus five degrees of being parallel to) the support arm outer surface 10(2). In the first position, the lock handle 284 is stowed within the area surrounded by the ridge 14.

The cam surface 290 is curvedly shaped so that when the lock handle 284 is in the first position, the portion of the cam surface 290 that contacts the locking pin 294 protrudes minimally toward the support arm 10. As a result, when the lock handle 284 is in the first position, the pin terminal end 294(3) is spaced apart from the driven gear 225, e.g., the pin terminal end 294(3) is disengaged from the hole 225(3) provided in the first gear face 225(1). Since the locking pin 294 is disengaged from the hole 225(3), the spindle 233 is permitted to freely rotate about the spindle axis 235.

When the lock handle 284 is in the second position, the handle longitudinal axis 283 is at a second handle angle θ6 relative to the support arm outer surface 10(2). In the illustrated embodiment, when the lock handle 284 is in the second position, the longitudinal axis 283 of the lock handle 284 is oriented to be substantially perpendicular to the outer surface 10(2) of the support arm 10 such that the handle first end 285 resides outside the area surrounded by the ridge 14. In other words, the second handle angle θ6 is 90 degrees or within plus or minus five degrees of being perpendicular to the support arm outer surface 10(2). In this orientation, the lock handle 284 protrudes outward relative to the support arm 10 and serves as a manual grip or handle that permits a user to easily hold and stabilize the cut-off saw 1 during attachment or detachment of the cutting blade 90. Thus, the lock handle 284 in the second position serves as a handle and actuates the spindle lock assembly 282 that prevents rotation of the spindle 233, facilitating the attachment or detachment of the cutting blade 90 to the cut-off saw 1.

When the lock handle 284 is in the second position, the portion of the cam surface 290 that contacts the locking pin 294 protrudes maximally toward the support arm 10. As a result, when the lock handle 284 is in the second position, the locking pin 294 is driven by the cam surface 290 toward the driven gear 225 and the pin terminal end 294(3) becomes engaged with one of the holes 225(3). When the locking pin 294 is engaged with the hole 225(3), the driven gear 225 and thus the spindle 233 are prevented from rotating about the spindle axis 235.

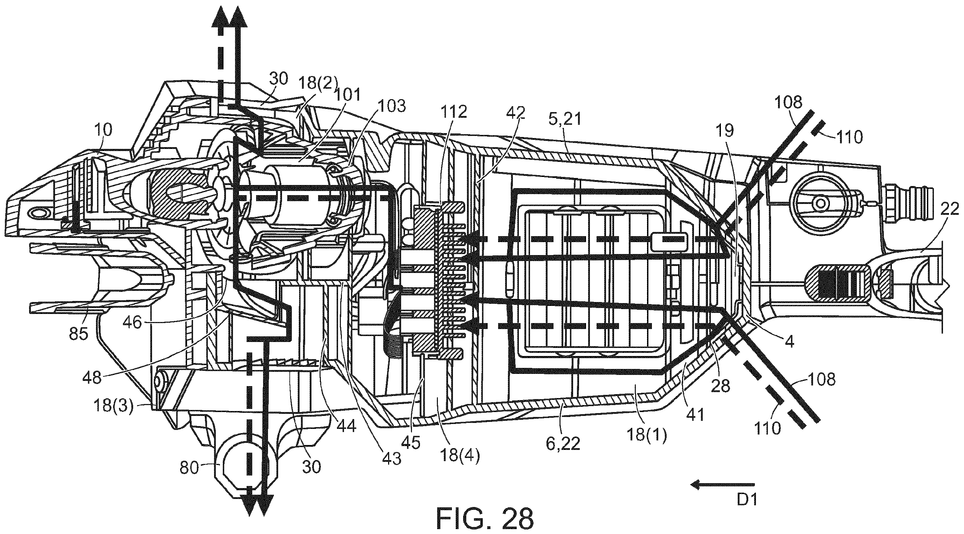

Referring to Figs. 6A-7and 27-28, the cut-off saw 1 includes features that cool the battery pack 116, the control electronics 118 and the electric motor 101. In particular, the cut-off saw 1 includes the housing rear inlet openings 28 and the housing side outlet openings 30 as well as the partitioning walls 41, 42, 43, 44 and their respective apertures 37(1), 37(2), 38(1), 38(2), 38(3), 38(4), 38(5) that are configured to direct cooling air flow through the saw housing 2. The cooling air flow is generated by the rotational motion of the rotor of the electric motor 101 and is also drawn through the saw housing 2 by the motor fan 100. In the illustrated embodiment, the cooling air flow moves along two cooling air flow paths 108, 110 through the saw housing 2.

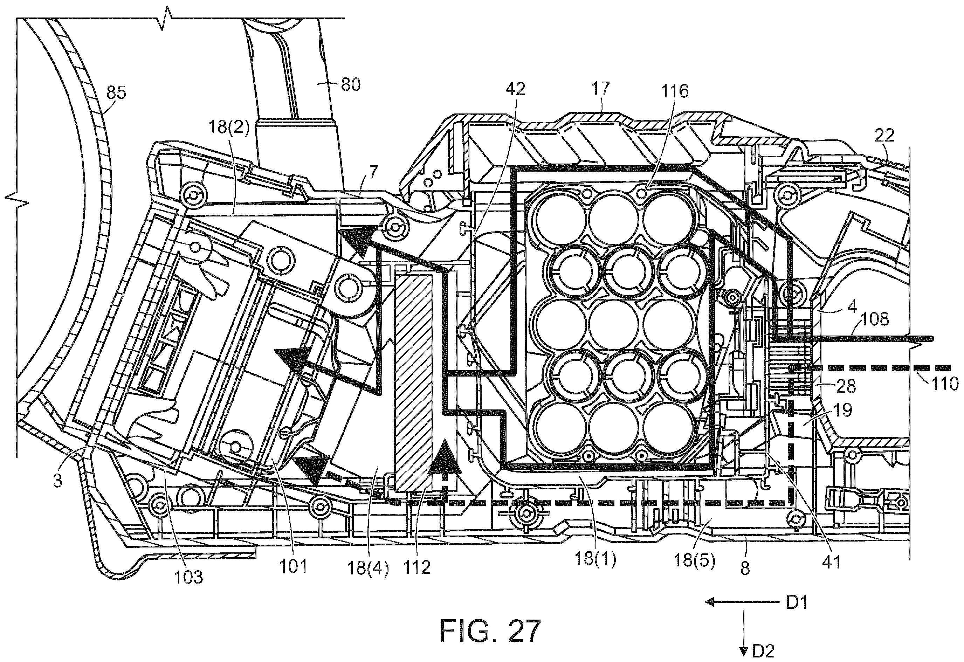

The first cooling air flow path 108 (represented by solid arrows) begins at the housing rear inlet opening 28, e.g., at the housing rear end 4. The first cooling air flow path 108 passes through the gap 19 and enters the first compartment 18(1) via the upper and lower first compartment inlet apertures 37(1), 37(2) that are provided in the first partitioning wall 41. Within the first compartment 18(1), the first cooling air flow path 108 passes over, under and around the lateral sides of the battery pack 116 and exits the first compartment 18(1) via the first compartment outlet apertures 38(1), 38(2), 38(3), 38(4), 38(5) provided in the second partitioning wall 42. Airflow throughout the entire first compartment 18(1) is enhanced since the first compartment inlet apertures 37(1), 37(2) are vertically offset from the first compartment outlet apertures 38(1), 38(2), 38(3), 38(4), 38(5), whereby air flow through the first compartment 18(1) is both longitudinal and in directions that are perpendicular to the housing longitudinal axis 9 (shown schematically in Fig. 27).

After exiting the first compartment 18(1), the first cooling air flow path 108 enters the space 18(4) and passes over the heatsink 114 of the PCBA 112. The fins 115 of the heatsink 114 direct the first cooling air flow path 108 upward toward the third side 7 and the first cooling air flow path 108 passes over the upper surface of the PCBA 12 and then downward toward an inlet end of the motor housing 103. The PCB of the PCBA 112 is thereby directly cooled by the first cooling air flow path 108. After cooling the PCBA 112, the first cooling air flow path 108 enters the second compartment 18(2). In the second compartment 18(2), the first cooling air flow path 108 passes through the motor 101 and the motor fan 100, whereby the motor is cooled. After passing through the motor 101 and motor fan 100, the first cooling air flow path 108 exits the saw housing 2 via the housing side outlet opening 30.

Notably, the first cooling air flow path 108 enters the first compartment 18(1) in a first direction D1 that is parallel to the saw housing longitudinal axis 9. The first cooling air flow path 108 exits the first compartment 18(1) in the first direction D1. Between entering the first compartment 18(1) and exiting the first compartment 18(1), the first cooling air flow path 108 moves in at least a second direction D2 that is perpendicular (for example, vertically, between top 7 and bottom 8) to the first direction D1, in order to accommodate the offset first compartment inlet and outlet apertures 37, 38.

The second cooling air flow path 110 (represented by broken arrows) begins at the housing rear inlet opening 28, e.g., at the housing rear end 4. The second cooling air flow path 110 passes through the gap 19 and enters a subspace 18(5) that is disposed between the first compartment 18(1) and the fourth (bottom) side 8. The subspace 18(5) extends from the rear end 4 toward the front end 3 and communicates with the space 18(4). Within space 18(4), the second cooling air flow path 110 passes above and below the PCBA 112 and then enters the second compartment 18(2). In the second compartment 18(2), the second cooling air flow path 110 passes through the motor 101 and the motor fan 100, whereby the motor is cooled. After passing through the motor 101 and motor fan 100, the second cooling air flow path 110 exits the saw housing 2 via the housing side outlet opening 30.

As the second cooling air flow path 110 passes below the first compartment 18(1), the second cooling air flow path cools both the first compartment 18(1) and the wiring harnesses that pass below the first compartment via the subspace 18(5).

Both the first and second cooling air flow paths 108, 110 pass through the space 18(4) in the area between the second and fourth partitioning walls 42, 44, and pass over the PCBA 112 after flowing through the heat sink cooling fins 115. After cooling the PCBA 112, both the first and second cooling air flow paths 108, 110 enter the second chamber 18(2) and pass through the motor 101 and the motor fan 100, whereby the motor 101 is cooled. After passing through the motor 101 and motor fan 100, both the first and second cooling air flow paths 108, 110 exit the saw housing 2 via tortuous paths to the housing side outlet openings 30. For example, to reach the housing side outlet opening 30 on the housing first side 5, both the first and second cooling air flow paths 108, 110 exit the fan 100 via the unobstructed recesses 103(3), flow around the motor housing 103 and into the space between the facing wall portion 35(1) and the first side 5 and is redirected by the shelf 32 and facing wall portion 35(1) out of the saw housing 2. To reach the housing side outlet opening 30 on the housing second side 6, both the first and second cooling air flow paths 108, 110 exit the fan 100 via the unobstructed recesses 103(3), flow around the motor housing 103 and into baffle 48 via the opening 46 in the third partitioning wall 43. The baffle 48 redirects laterally directed airflow from the second compartment 18(2) to the third compartment 18(3) through a ninety degree turn. Air flow exiting the baffle 48 impinges on the fourth partitioning wall 44 and is again redirected by the fourth partitioning wall 44 to flow toward the front end 3 and toward the outlet opening 30 of the housing second side 6. The tortuous paths to each of the housing side outlet openings 30 are advantageous since they prevent or inhibit ingress of liquid during saw operation.

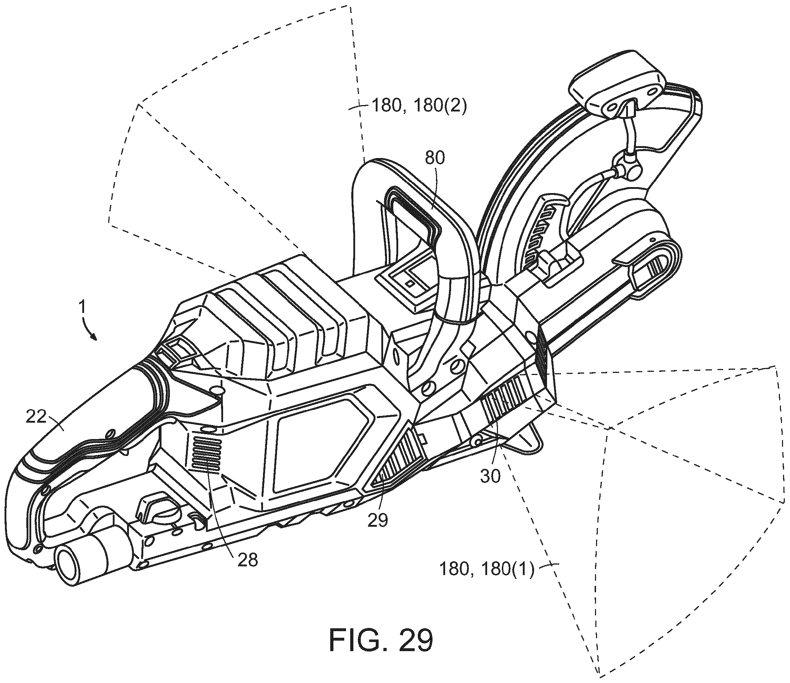

Referring to Fig. 29, in addition to the cooling air flow paths 108, 110, the saw housing 2 includes features that permit an air curtain 180 to be formed in the vicinity of the front end of the saw housing 2 and the cutting blade 90. In particular, the cut-off saw 1 includes the housing side outlet openings 30 which are strategically located on the saw housing 2 and oriented in space to provide the air curtain that is configured to remove dust and debris from the work space and improve visibility of the workpiece. In the illustrated embodiment, the housing side outlet openings 30 are longitudinally located adjacent to the outlet of the motor 101 and the motor fan 100 (e.g., at the front end of the saw housing 2) and are configured to direct a high pressure air flow 180(1), 180(2) exhausted from the motor 101 and motor fan 100 laterally outward from the lateral sides of the saw housing 2 and toward the front end 3. As discussed above, the housing side outlet openings 30 include the angled slots that exhaust air at the appropriate angle (for example, the first and second angles θ1, θ2) with respect to the housing longitudinal axis 9. The high volume of air flowing outward from the housing side outlet openings 30 form the air curtain 180 that is configured to direct cutting dust and debris away from the front of the cut-off saw, improving the visibility of the cutting blade 90 and work area while also improving the user experience by moving the cutting dust and debris away from the user.

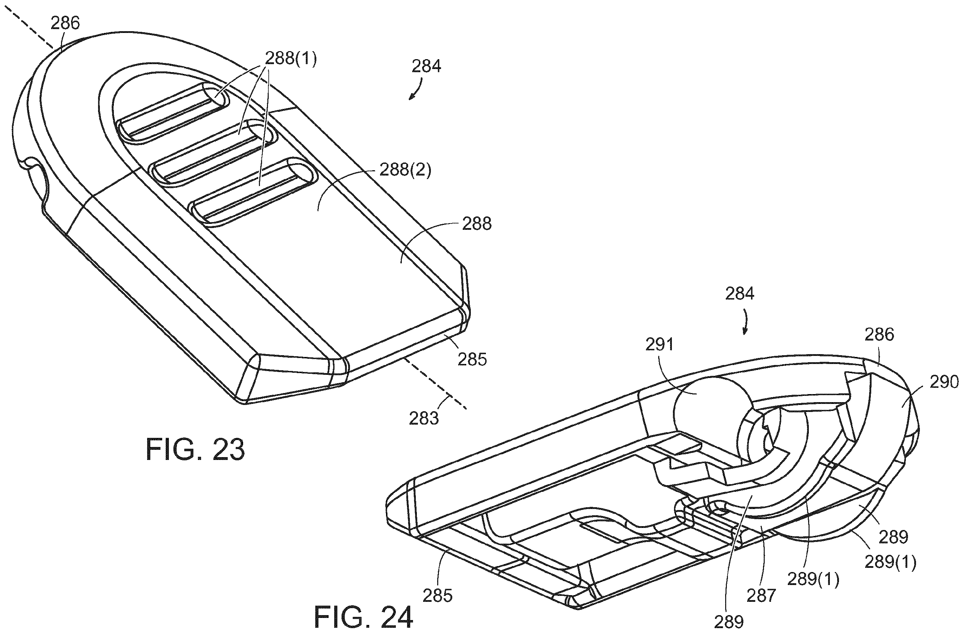

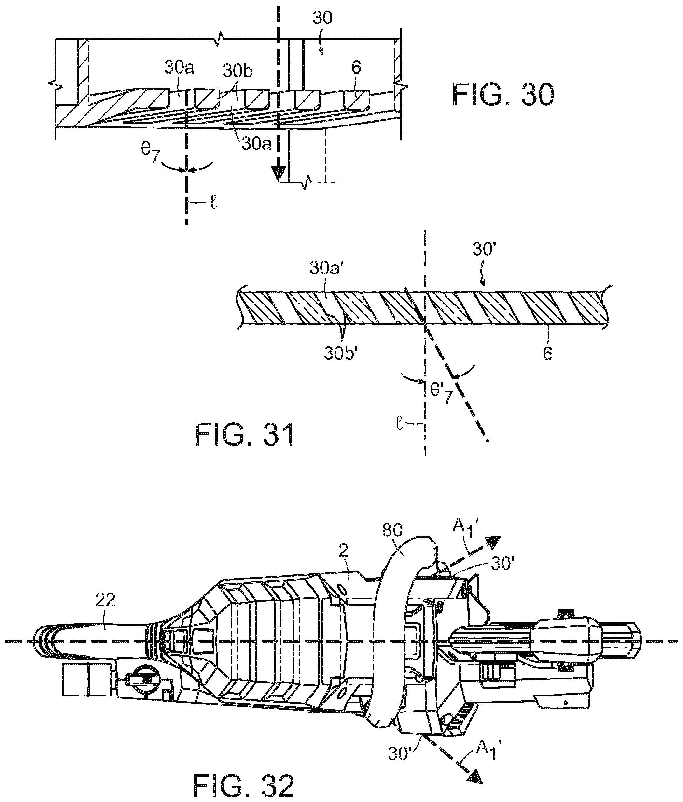

Referring to Figs. 30-32, in the embodiment of the saw 1 described above, the slot angles for each of the housing rear inlet openings 28 and the housing side outlet openings 30 are formed through the thickness of the respecting housing portion such that the surfaces 28b, 30b that define each of the slots 28a, 30a are parallel to a line ℓ that is normal to surface of the respective housing portion (Fig. 30). In other words, the slots 28a, 30a, have a slot angle Θ7 of 0 degrees with respect to the normal line ℓ, which is represented in Fig. 24 as a broken line. However, in some embodiments, the slots 30a' of housing side outlet openings 30' may have slot surfaces 30b' that are at a non-zero angle with respect to the normal line to the corresponding first and second side 5, 6 (Fig. 31). This allows the direction of air flow that provides air curtain 180 to be more specifically directionally targeted. In some embodiments, the slot angle Θ7' is in a range of zero to 85 degrees. In other embodiments, the slot angle Θ7' is in a range of 25 degrees to 75 degrees. In still other embodiments, the slot angle Θ7' is in a range of 30 to 60 degrees. By this configuration, the slot angle Θ7' may be set to direct air being exhausted from the interior space 18 generally more forwardly and, in some embodiments, and toward the support arm 10 and cutting blade 90.

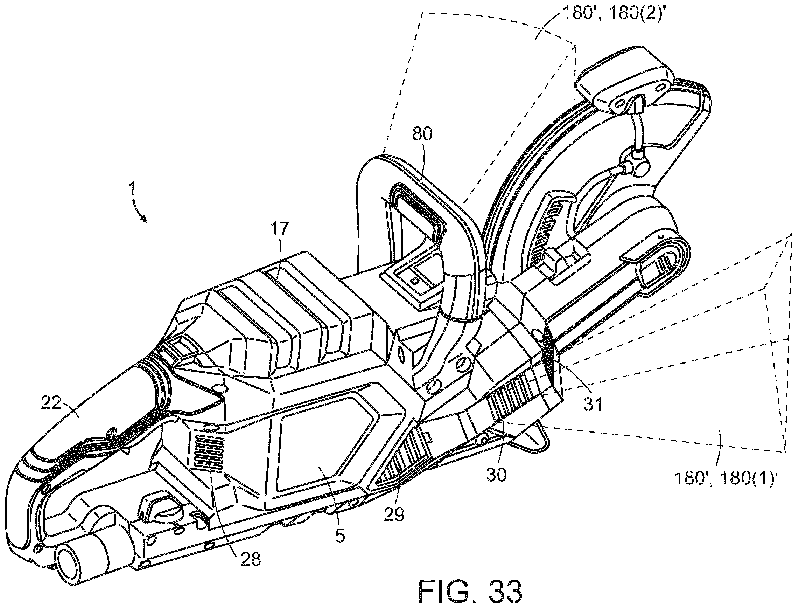

Referring to Fig. 33, in one example, each housing side outlet opening 30 is configured to discharge air from the housing interior space 18 in a direction represented by arrow A1' that is both laterally and forwardly directed. To that end, the slot angle Θ7' of the housing side outlet opening 30 may be 45 degrees and is oriented so that air flowing out of each housing side outlet opening 30 is forwardly and outwardly directed. By this configuration, the slot angle Θ7' is set to direct air being exhausted from the interior space 18 toward the support arm 10 and the cutting blade 90.

Selective illustrative embodiments of the cut-off saw are described above in some detail. Only structures considered necessary for clarifying the cut-off saw have been described herein. Other conventional structures, and those of ancillary and auxiliary components of the cut-off saw are assumed to be known and understood by those skilled in the art. Moreover, while a working example of the cut-off saw has been described above, the cut-off saw is not limited to the working example described above, but various design alterations may be carried out without departing from the cut-off saw as set forth in the claims.

## Claims

1. A saw, comprising:
a saw housing, the saw housing including
a front end,
a rear end opposite the front end, the rear end including a housing rear inlet opening that permits fluid communication between an interior space of the saw housing and an environment of the saw housing,
a longitudinal axis that extends through the front end and the rear end,
a first lateral side that extends between the front end and the rear end, the first lateral side including a housing side outlet opening that permits fluid communication between the interior space of the saw housing and the environment of the saw housing,
a second lateral side that extends between the front and the rear end, the second lateral side disposed on a side of the longitudinal axis that is opposite the first lateral side,
a hollow support arm that protrudes outward from the front end, the support arm configured to support a cutting blade,
a main handle that protrudes outward from an outer surface of the housing, and
partitioning walls disposed in the interior space of the saw housing, the partitioning walls including a first wall that faces the rear end and a second wall that faces the front end, the first wall and the second wall extending between the first lateral side and the second lateral side so as to define a first compartment of the interior space that is separate from a second compartment of the interior space, the first compartment configured to receive and support a battery pack;
an electric motor disposed in the second compartment, the electric motor including an output shaft that is rotatable about an output shaft axis, the output shaft being disposed in a plane that is parallel to the longitudinal axis;
a motor fan driven by the output shaft, the motor fan disposed between the electric motor and the front end and configured to draw cooling air through the saw housing via a first cooling air flow path; and
a printed circuit board assembly that supports electronics that are configured to control operation of the saw, the printed circuit board assembly disposed between the second wall and the electric motor,
wherein
the first compartment is disposed between the electric motor and the rear end,
the first cooling air flow path
beginning at the housing rear inlet opening,
extending from the housing rear inlet opening to a first compartment inlet aperture formed in the first wall,
extending from the first compartment inlet aperture through the first compartment to a first compartment outlet aperture formed in the second wall,
extending from the first compartment outlet aperture and into the second compartment,
extending through the second compartment, and
ending at the housing side outlet opening.

2. The saw of claim 1, wherein
the first cooling air flow path enters the first compartment in a first direction that is parallel to the longitudinal axis,
the first cooling air flow path exits the first compartment in the first direction, and
between entering the first compartment and exiting the first compartment, the first cooling air flow path moves in a direction perpendicular to the first direction.

3. The saw of claim 1, wherein the first compartment outlet aperture is offset relative to the first compartment inlet aperture along an axis perpendicular to the longitudinal axis.

4. The saw of claim 1, wherein
the saw includes a battery pack disposed in the first compartment,
the battery pack includes four sides that extend in parallel to the longitudinal axis, and
the first cooling air flow path passes over each of the four sides of the battery pack.

5. The saw of claim 1, wherein after extending through the second compartment and before ending at the housing side outlet opening, the first cooling air flow path passes across the printed circuit board assembly and through the electric motor.

6. The saw of claim 5, wherein
the printed circuit board assembly includes printed circuit board and a heat sink that adjoins one side of the printed circuit board,
the heat sink is disposed between printed circuit board and the second wall,
the heat sink includes an array of protruding cooling fins that protrude toward the second wall, and
the first cooling air flow path passes through the array of cooling fins.

7. The saw of claim 6, wherein
the array of protruding cooling fins extends in a direction parallel to the first lateral side and the second lateral side.

8. The saw of claim 1, wherein
the saw housing comprises:
a third side that extends between the front end and the rear end and between the first lateral side and the second lateral side; and
a fourth side that extends between the front and the rear end and between the first lateral side and the second lateral side, the fourth side disposed on a side of the longitudinal axis that is opposite the third side, and
the saw comprises a second cooling air flow path through the saw housing, the second cooling air flow path
beginning at the housing rear inlet opening,
extending from the housing rear inlet opening to a gap between the first compartment and the third side of the saw housing,
extending through the gap and exiting into the second compartment, and
ending at the housing side outlet opening.

9. The saw of claim 8, wherein the second cooling air flow path passes across the printed circuit board assembly and through the electric motor.

10. The saw of claim 9, wherein
the printed circuit board assembly includes a printed circuit board and a heat sink that adjoins one side of the printed circuit board,
the heat sink includes an array of protruding cooling fins, and
the second cooling air flow path passes through the protruding cooling fins before passing across the printed circuit board and through the electric motor.

11. The saw of claim 1, wherein
the saw housing is formed of a first half shell and a second half shell that are joined along a parting line that extends from the front end to the rear end,
the housing rear inlet opening comprises two housing rear inlet openings, one of the two housing rear inlet openings being formed in the first half shell and the other of the two housing rear inlet openings being formed in the second half shell, and
the housing side outlet opening comprises two housing side outlet openings, one of the two housing side outlet openings being formed in the first half shell and the other of the two housing side outlet openings being formed in the second half shell.

12. The saw of claim 1, wherein the printed circuit board assembly resides in a plane that is perpendicular to the longitudinal axis.

13. The saw of claim 1, wherein
the printed circuit board assembly includes a printed circuit board and a heat sink that adjoins one side of the printed circuit board,
the saw housing comprises a wall portion that supports the printed circuit board assembly, and the wall portion is configured to direct airflow to the heat sink.

14. The saw of claim 1, wherein
a blade drive assembly is disposed in the support arm, the blade drive assembly configured to detachably connect a cutting blade to the support arm and transmit a rotational motion of the output shaft to the cutting blade when the cutting blade is connected to the saw.

15. The saw of claim 1, comprising
a battery pack that is disposed in the first compartment, the battery pack configured to supply power to the electric motor.

16. A saw, comprising:
a saw housing, the saw housing including
a front end,
a rear end opposite the front end,
a hollow support arm that protrudes outward from the front end,
a main handle that protrudes outward from the rear end, and
partitioning walls disposed in an interior space of the saw housing, the partitioning walls forming a first compartment of the interior space that is separate from a second compartment of the interior space;
an electric motor disposed in the second compartment, the electric motor including an output shaft that is rotatable about an output shaft axis;
a battery pack disposed in the first compartment, the battery pack configured to supply power to the electric motor;
a printed circuit board assembly that supports electronics that are configured to control operation of the saw, the printed circuit board disposed between the battery pack and the electric motor;
and
a blade drive assembly disposed in the support arm, the blade drive assembly configured to detachably connect a cutting blade to the support arm and transmit a rotational motion of the output shaft to the cutting blade when the cutting blade is connected to the saw,
wherein
the saw housing includes features that define a first cooling air flow path through the saw housing and a second cooling air flow path through the housing,
the first cooling path passes through the first compartment before exiting the saw housing,
the second cooling path passes around an outer surface of the first compartment before exiting the saw housing, and
both the first and second cooling paths pass through the electric motor before exiting the saw housing.
